(19) **Europäisches Patentamt**

**European Patent Office**

**Office européen des brevets**

(11) **EP 0 966 837 B1**

(12) **EUROPEAN PATENT SPECIFICATION**

(45) Date of publication and mention
of the grant of the patent:
**24.07.2002 Bulletin 2002/30**

(51) Int Cl.$^7$: **H04N 7/08**

(86) International application number:
**PCT/GB98/00732**

(21) Application number: **98909603.7**

(22) Date of filing: **11.03.1998**

(87) International publication number:
**WO 98/41017 (17.09.1998 Gazette 1998/37)**

(54) **METHOD AND APPARATUS FOR CODING INFORMATION**

VERFAHREN UND VORRICHTUNG ZUR INFORMATIONSKODIERUNG

PROCEDE ET SYSTEME DE CODAGE D'INFORMATIONS

(84) Designated Contracting States:
**AT BE CH DE DK ES FI FR GB GR IE IT LI LU MC NL PT SE**

(30) Priority: **12.03.1997 GB 9705045**

(43) Date of publication of application:
**29.12.1999 Bulletin 1999/52**

(73) Proprietor: **CENTRAL RESEARCH LABORATORIES LIMITED**
**Hayes, Middlesex, UB3 1HH (GB)**

(72) Inventors:
• **TODD, Martin, Peter**
**Uxbridge, Middlesex UB10 9NQ (GB)**
• **NACKVI, Fawad**
**Middlesex UB2 5PR (GB)**

(74) Representative: **Walker, Neville Daniel Alan**
**QED I.P. Services Limited**
**Dawley Road**
**Hayes, Middlesex UB3 1HH (GB)**

(56) References cited:
EP-A- 0 360 615        WO-A-96/25005
WO-A-98/06216

• BENDER W ET AL: "TECHNIQUES FOR DATA HIDING" PROCEEDINGS OF THE SPIE, vol. 2420, 9 February 1995, pages 164-173, XP000571877
• BOLAND F M ET AL: "WATERMARKING DIGITAL IMAGES FOR COPYRIGHT PROTECTION" INTERNATIONAL CONFERENCE ON IMAGE PROCESSING AND ITS APPLICATIONS, 4 July 1995, pages 326-330, XP000603824

**Description**

The present invention relates to a method and apparatus for the insertion, and subsequent decoding, of coded information into images.

It is known to insert codes into images, for example video transmissions or video clips or stills transmitted across a telecommunication link, for the purpose of identifying the owner of the images. There are a number of known schemes for inserting identification codes into the sync periods, and more recently it has been proposed to insert identification codes into the image itself, but in such a manner that the code cannot be detected by the eye.

WO 95/14289 discloses the embedding of an identification code throughout an image by modulating a digitised version of the image with a small noise signal. The specific system described suffers from the disadvantage of requiring to have to hand the original image for code identification. Further improvements in code robustness for transmission over telecommunications links or broadcasting are also desirable.

WO 95/20291 discloses a method of hiding copyright related messages with a digital data work, which relies on commonly occurring patterns or sequences of data in the work acting as signposts to target data elements which are modified according to certain rules. The disclosed method suffers from a lack of robustness to signal degradation.

Also discloses a method of hiding a copyright message within digital data works. The coded information is distributed throughout the whole image by embedding the coded information in a present pattern of pixels, and no attempt is made to identify strongly featured regions of the image and insert information in these regions. Furthermore, the method is not very suited for embedded codes in a video image, because the method does not address the problem of ensuring that the same pixel in each immediate follow frame, or field, of the image does not contain embedded codes. With video images, if no attempt is made to ensure the pattern of selected pixels is varied from one frame to another, the presence of embedded code will be detected and appear as a shimmer to the observer.

The above references suffer from a disadvantage that they are concerned wholly or principally with the digital domain, and the disclosed techniques are not suited to the analog domain, in particular where digital to analog conversion and analog to digital conversion may easily lose or degrade individual pixel values.

In our copending application PCT/GB96/00246 (publication number WO 9625005), there is disclosed and claimed a method for inserting coded information into an image, comprising analysing the image, identifying strongly featured regions and inserting coded information into these regions. Because the method relies on an analysis of the entire image and code being inserted in strongly featured regions rather than in individual pixels as in the prior art, the code is better able to survive analog to digital conversions and digital to analog conversions, where there will inevitably be pixel misalignments between the original and processed images, and hence the pixel values will be apparently altered.

By "strongly featured regions" is meant regions of primary strength to which the eye responds in viewing an image for example textured regions or lines or boundaries between two regions of different luminance. In such regions, it is possible to insert a relatively large amount of information without significantly altering the image in its appearance to the eye. As preferred, edge regions between areas of different luminance are employed since these are very distinctive and will permit code insertion without visibly degrading the image, and the coded information is inserted into such strongly featured regions by altering the structure of the image in such region in a predictable or identifiable manner. The image is altered by applying an insert function to an area including the strongly featured region, which insert function gradually decreases in intensity from the centre of its region of application, so as to blend with the surrounding region.

A main advantage of applying the coded information by altering the image in a predictable or identifiable manner is that the information can be recovered in a decoding process at a remote location without having the original to hand.

As disclosed, in our copending Application PCT/GB96/00246, the image, e.g. a video frame, is divided up into a number M*N of blocks in M rows and N columns, each block comprising n*n pixel elements (e.g. 8x8). Strongly featured regions are searched in each block for insertion of code. In order to encode a significant amount of information into an image, it is necessary to apply the insertion function to a number of edges in the image. If for example, one edge is chosen in each block into which the image is divided, then in order to increase confidence when attempting to recognise the code, the edges in one row may be encoded according to two separate pseudo-random codes, representing a "1" or "0".

Prior to inserting the information, the image is assessed as to whether the image is suitable for code insertion, for example the degree of consistency of the edge, the definition of the edge centre to prevent insertions when the image is determined to be unsuitable. Problems have arisen where more than one distinct edge is present in the image, or the part of the image under consideration for code insertion; for example there may be a comer feature.

In our co-pending British Application 9616571.7 (published International Application No. PCT/GB97/02060, WO-A-9806216), a block within an image may be selected to be encoded using an edge detection based scheme, the selection being dependant on the edge activity in the block. This allows for encoding of blocks with multiple features such as blocks containing a comer or block containing two edges. In these blocks an edge detection scheme is applied to the block to produce a function within the block which has a value at each pixel which is related to the strength of the edge at that pixel. This edge function is suitably scaled, and optionally multiplied by a circular function centred on the centre of the block. The scaled edge function is then added to the image on a pixel by pixel basis, with the sign of the function, plus or minus, representing a "1" or "0" bit of information. In a decoding operation, edges are detected and an estimate is made of the appropriate edge function. This estimate is then correlated with the image in order to reveal the existence of coded information.

The inventions disclosed in our co-pending applications PCT/GB96/00246 and British Patent Application No 9616571.7 treat each frame of a video sequence as separate entities. Codes can be embedded successfully in video still pictures and in some video film sequences without the embedded codes being detectable by the viewer. Usually each frame of a video sequence is made of two fields, one of which constitutes the even lines of the displayed image and the other the odd lines of the displayed image. The frames are separated by a syncronisation period (often referred to as the sync period). It has been found that in some high quality broadcast videos, the embedded code is noticeable as a slight shimmer at the edge region due to the fact that in successive fields or frames of the video image the same blocks are used to embed coded information. If the fields or frames do not align exactly, that is to say that there are slight miss-matches of each block in subsequent fields of the video sequence then the viewer will see a slight shimmer at the regions where the code is embedded.

European Patent Application No. EP 0 360 615 A2 (Dubner Computer Systems) discloses a method and apparatus for embedding data in a video signal by adding a low level waveform to the video signal, the low level waveform having a level below the noise level of the video signal and corresponding to the data. However, the area in which data is embedded varies from frame to frame in order to avoid fixed-pattern noise anomalies that may be detected by a viewer. This technique differs substantially from the technique disclosed herein.

An object of the present invention is to improve the visually embedded coding capability of video by relating the encoding of one field to that of the adjacent fields such that visibility of the codes is reduced by ensuring that the same blocks used in one field to carry the code are not used in a number of successive fields.

A further object is to allow the insertion of stronger codes into a video image such that their retrieval is more robust, and to allow for each bit of the information to be spread over several fields of a video sequence.

The invention as claimed herein, achieves the above mentioned objects by providing methods and apparatus for encoding and decoding images by dividing the image into a plurality of fields, each of which are divided into N * M blocks of n * m pixels. A predetermined pattern of blocks are selected in each field as candidates for carrying the embedded code, but blocks selected in one field are not selected in a predetermined number of immediately following successive fields in the sequence. In this way the embedded codes are less likely to produce the shimmer effect referred to above.

The encoding and decoding processes have to be synchronised because an encoded image may be presented to the decoder in a geometrically altered state from which it was encoded. The geometric transformation may be for example an offset (x,y) translation, or a scaling in one or both axes (including different scaling in each axis), or a rotation. If the geometric transformation is of a significant size, then in order to decode it this geometric distortion must be accounted for. The decoder synchronising process achieves this by an analysis process involving splitting the image into fields, splitting each field into blocks, applying the patterns to each field to define selected blocks as used by the encoder, analysing the selected blocks for the type of insert and decoding the same selected blocks as created by the encoder accordingly. The encoding and decoding processes produce a measure of coded insets and their centres and the regularity of their structure. The offsets, scaling and rotations are then calculated from the geometric variations of the centres and structure during the decoding process and this is then used to correct the image before the final decoding.

### Brief Description of the Drawings

A preferred embodiment of the invention will now be described with reference to the accompanying drawing in which:

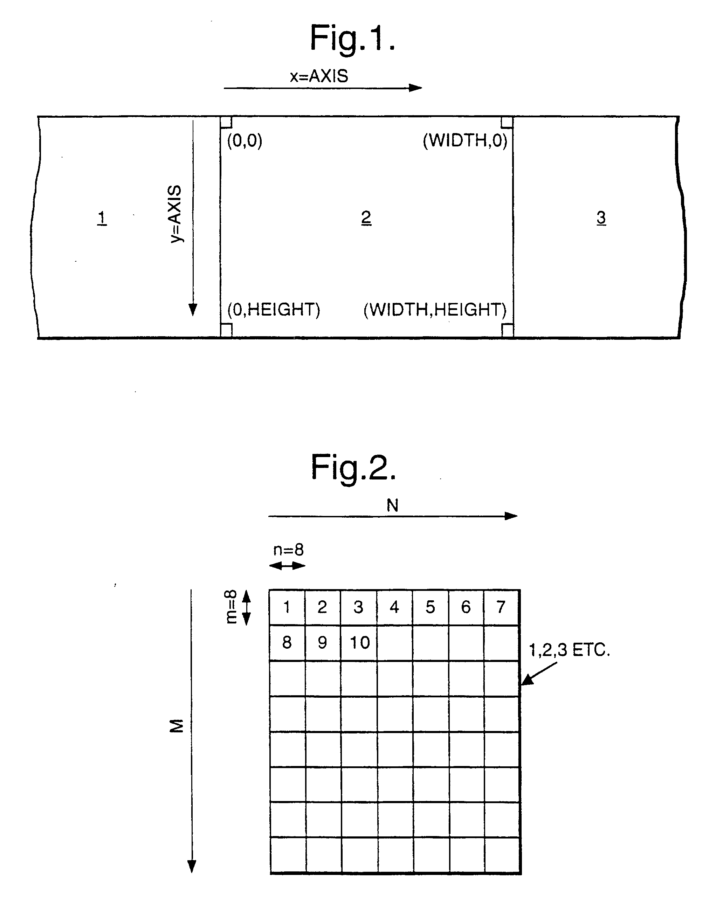

Figures 1 to 9 are diagrams for explaining the preferred method and apparatus for encoding and decoding images in accordance with the present invention.

### Description of the Preferred Embodiment

The algorithmic steps used in the preferred embodiment of the invention will now be explained in detail. The encoding and decoding algorithms are listed below as a sequence of steps:

**Encoding Algorithm**

1) Split the video sequence (image) into a plurality of fields.

2) Split each field into adjacent blocks each of n*n pixels.

3) Define a predetermined sequence of different selection patterns, each of which selects a predetermined pattern of selected blocks, each pattern in the sequence being such that blocks selected in each pattern are not selected in a predetermined number of successive patterns immediately following in the sequence.

4) Apply the first selection pattern of the sequence to a first selected field to select blocks in the first field.

5) Apply the next successive pattern in the sequence to the next successive field to select blocks in that field.

6) Repeat step 5 over a predetermined number of fields for all patterns in the sequence.

7) Repeat steps 3 to 6 cyclically for successive fields throughout the video sequence.

8) Define one or more subsets of the selected blocks.

9) Calculate the dominant orientation in each selected block.

10) Calculate the amount of activity in each selected block.
   Calculate the consistency of the dominant Orientation in each selected block.

11) To encode one data bit in a selected subset of selected blocks, process each selected block within the subset as follows.

   11(a) look up the next element of the PRS for the data bit

      1) if it is a +1 set to add

      2) if it is a -1 set to subtract

   11(b) Segment the selected blocks of the subset in the following categories

      1) a single edge/line in a dominant orientation

      2) a low activity block

      3) several major lines or edges

   11(c) Process the selected blocks of the subset as follows:-

      1) add/subtract an elliptical function

         i) centred on the edge

         ii) aligned to the block orientation

         iii) scaled by the activity in the block

      2) add/subtract a circular function

         i) centred on the centre of the block

ii) fixed strength

3) No insertion

12 Repeat step 11 until all the bits are encoded.

**Decoding Algorithm**

1) Split the image (video sequence) into a plurality of fields.

2) Split each field into adjacent blocks each of n*n pixels.

3) Define a predetermined sequence of different selection patterns, each of which selects a predetermined pattern of selected blocks, each pattern in the sequence being such that blocks selected in each pattern are not selected in a predetermined number of successive patterns immediately following in the sequence.

4) Apply the first selection pattern of the sequence to a first selected field to select blocks in the first field.

5) Apply the next successive pattern in the sequence to the next successive field to select blocks in that field.

6) Repeat step 5 over a predetermined number of fields for all patterns in the sequence.

7) Repeat steps 3 to 6 cyclically for successive fields throughout the video sequence.

8) Define one or more subsets of the selected blocks.

9) Calculate the dominant orientation in each selected block.

10) Calculate the amount of activity in each selected block.
Calculate the consistency of the dominant orientation in each selected block.

11) To decode one data bit, process each selected block in a selected subset of selected blocks as follows:-

11(a) segment the blocks in the following categories:-

i) a single edge/line in a dominant orientation

ii) a low activity block

iii) several major lines or edges

11(b) process the selected blocks in each subset of selected blocks as follows:-

1) calculate the concave/convexness of an elliptical function

ii) centred on the edge

iii) aligned to the block orientation

iv) scaled by the activity in the block

2) calculate the concave/convexness of a circular function

i) centred on the centre of the block

ii) fixed strength

3) do nothing

11(c) correlate the convex/concaveness of each selected block with the next element of the data bit 1 PRS and accumulate the result.

11(d) correlate the convex/concave-ness of each selected block with the next element of the data bit 0 PRS and accumulate the result.

12) Compare the data bit 1 accumulated correlation with the data bit 0 accumulated correlation. The larger of the two is the decoded data bit. The size of the correlation gives the confidence in the result.

13) repeat steps 11) and 12) for each data bit.

Referring now to Figure 1, the video image in which the code is to be embedded is analysed and divided into adjacent fields 1, 2, 3, 4. The field axis conventions used to describe the mathematics are shown in Figure 1. A pixel is defined by its coordinates (x, y) in each field and its luminance value is r (x,y). Note the top left pixel in each field is the (0, 0) pixel and that the y axis has its positive direction down the field.

Each field is segmented into N * M non-overlapping blocks as shown in Figure 2, each block being of size n by n pixels. Smaller values of n or m mean that it is more likely that only a single edge will be found in any given block. It also means that more individual blocks will be available for the correlation process. Larger values of n or m mean that larger, and therefore more robust, insertions can be made. In practice a good choice of n and m is 8. The block axis conventions used in segmenting the field are shown in Figure 2.

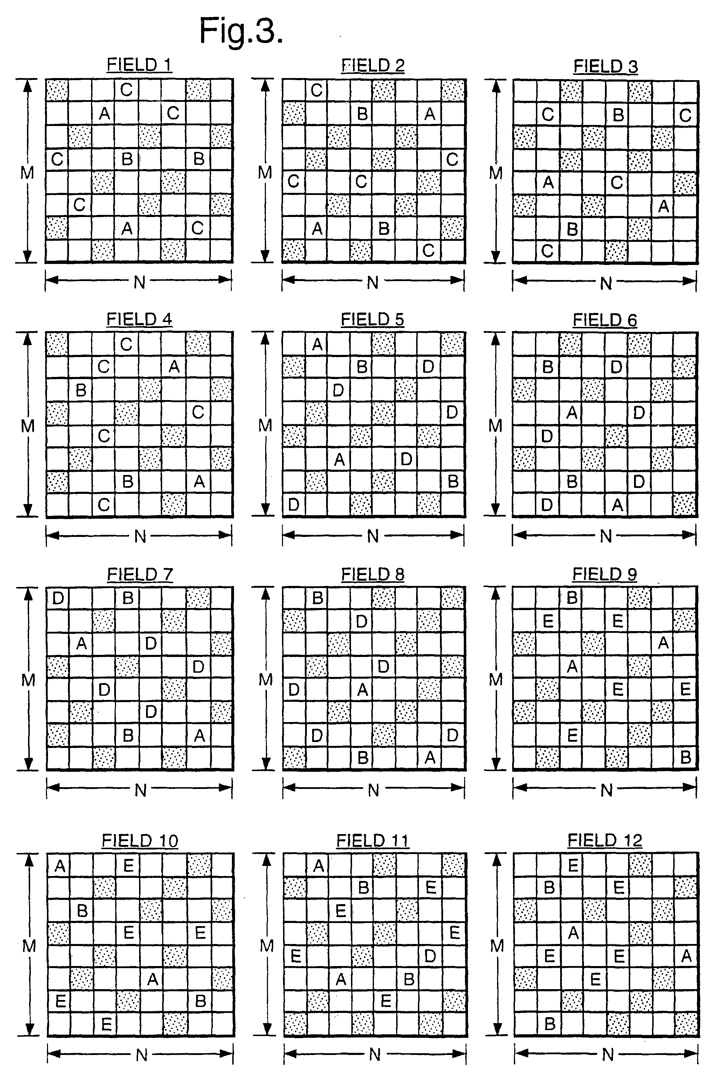

A sequence of selection patterns is defined each of which selects a different group of blocks 13. A first selection pattern of the sequence of patterns is applied to the first field 1 (the nominated field) to select blocks 13, shown in Figure 3 (hereinafter called "selected blocks"). In the example shown a sequence of three selection patterns is used, although the number of patterns in the sequence may be any number. Each pattern in the example shown selects $\alpha$ of the blocks, and although every third block in the grid is selected, each pattern in the sequence is displaced by one block so that the blocks selected in field one are not selected in the next following two fields 2, 3. Similarly the blocks 13 selected in field 2 are not selected in the next following two fields 3, 4 and so on.

There may be any number of patterns in a sequence of patterns and each pattern may select more or less number of blocks than that selected in adjacent fields.

The patterns are applied cyclically. That is to say that the sequence of predetermined patterns may be repeated by applying the function (cfc + I + j) K P = = 0 where I and j are the horizontal and vertical indices of the blocks in the fields, K is a modulus, P is the number of patterns in the sequence of patterns, and cfc is a cyclic field count. When the function is true a block is selected, when it is false the block is not selected. In Figure 3 every third block is selected, the cyclic count counts 0, 1, 2, 0, 1, 2, 0, 1, 2, and so on, incrementing at each field.

To make up a bit of information, a subset of the selected blocks 13, are grouped together for each bit and each of the selected blocks is analysed and the appropriate code embedded as described below.

In some source material a short sequence of fields may have a content which is difficult to encode. This may occur if the fields have very few edges in them or if the fields are blurred or if the field is almost blank. If the subset of selected blocks which make up an individual bit are all within this short sequence of fields, retrieval of the coded information will not be very robust. In addition some video equipment such as compression and standards conversion may process the fields in such a way that some individual fields are either totally missing or are very distorted, whilst other fields are retained. This can occur when a compression system interpolates an entire field from its neighbours, or when a cheap standards converter drops a whole field.

In order to improve robustness of the retrieval of the individual bits in these circumstances, the subset of selected blocks used for each bit is spread out over a wider number of fields. This ensures that where certain fields provide little decoding information, because of either the content of the source material or some processing it has undergone, the effect of this on any particular bit is minimised, as the correlation process for that bit will also have decoding information from other fields.

The number and distribution of the subset of blocks grouped together to make up each bit of information can be varied for each bit of information depending on the requirements for particular applications. Subsets which are spread over more fields will have a longer delay before they are decoded, and hence will not be able to identify the material with such high time accuracy. For example a subset spread over one second will only be able to identify material to one second accuracy, and will not be able to detect reliably edited clips shorter than two seconds. Subsets which have more blocks will be more robustly retrieved after passing through video processing equipment.

Since different applications have different requirements, and indeed most applications have multiple requirements, the grouping of selected blocks 13 is such that the different bits of information use different numbers of selected blocks 13 and distributions of subsets. Each distribution of selected blocks 13 and subsets is known to both encoder and decoder.

As an example, an ownership identification can be encoded into the material by spreading the blocks 13 over 5 fields, and using 20% of the available blocks in each field. This identification is repeated every 5 fields, and hence any 10 fields (<0.5 sec) will contain the ownership identification. Additional data is also encoded, by spreading the blocks over 50 fields (1 sec for PAL) using 70% of the available blocks in each field. This additional data may contain information such as time and date of encoding and material identification number, but can not be reliably retrieved from edited clips of less than 2 seconds. The final 10% of the blocks available in each field may be split between 5% used to carry a copy protection flag and 5% used to carry a film certification classification, and these may be spread over 500 fields (10 seconds for PAL). Figure 3 illustrates the principle, for illustrative purposes, and neither the exact pattern of the blocks nor the number of fields for which each pattern continues is meant to be anything more than one example.

In Figure 3 the blocks marked A carry copy-protection information over 100 fields, the blocks marked B carry certification information over 100 fields, the blocks marked C carry ownership details (first insert) over 4 fields blocks marked D carry ownership details (2nd insert) over 4 fields, blocks marked E carry ownership details (third insert) over 4 fields and the shaded blocks carry time/date and other data over 25 fields.

With the proposed invention it would be possible to use a cheaper decoder which only processes those subsets of blocks 13 that go to make up one or more sets of data bits. This cheaper decoder could be one which cannot decode the full set of data embedded in the image but only a limited set of data, for example, the ownership details. The advantage of using a cut-down version of the decoder is that, since it is only required to process fewer blocks, it requires less computation and this reduces manufacturing costs. Such a cut-down decoder for example for copy protection decoding would only require 5% of the processing power of a full decoder.

The code to be embedded in the selected blocks 13, is inserted and decoded in exactly the same way as described in our co-pending patent applications Nos PCTIGB96/00246 and British Patent Application 9616571.7. For completeness in this specification, the processes for encoding and decoding each of the selected blocks 13 is described below.

In accordance with a preferred embodiment of the invention, hidden local insertions are embedded in edges within the image. Edge regions are known to have masking properties because of the way the human visual system works. In particular the local orientation of the edges are improtant, and there are specific structures in the primary visual cortex for detecting both the presence of an edge and its local orientation (to a resolution of about 32 difference orientations).

The insertions are such that they do not alter the local orientation. They must also survive low pass filtering since this is a common process used in the processing of images. The insertions are made along the length of a local section of edge, and make the grey level gradient along the direction of the edge either a concave or a convex function over the distance of the insertion i.e. travelling from a start to the end point of the insertion along the direction of the edge of the grey level is either greater or less than would be expected by a simple linear interpolation from the start and end points. One important point of this is that at the start and end points the grey level must return to the value of the original image in order to prevent any propagation of the distortion, or any discontinuities.

The insertions are made as a 2D function, by using an ellipse which is aligned to the local orientation. The ellipse has a cross sectional function which is a ½ cycle of a cosine function and is used to weight the extent of the insertion, i.e. outside the ellipse no insertion is made, within it the insertion is weighted by the cosine function. This gives the concave or convex function by adding or subtracting it to the image. The magnitude of the insertion can be varied according to the amount of activity in each selected block; for a high activity block a stronger insertion can be buried. It is not always possible to produce the required function; a block which already has a very strong convex function may require the insertion to be very large to convert it to a concave one, and this may produce a visible artefact. This is one of the reasons for using an accumulation of a number of blocks to produce a single bit (see below).

The size of the insertions and their positions are fixed by processing the image in a block by block manner, typically with a block size of 8 by 8 pixels.

There may be insufficient selected blocks 13 within an image which have an edge to generate a consistent result, particularly since the selection of these edge blocks may be inconsistent when the images are processed. This can lead to problems in keeping the decoding process in synchronisation with the encoding process, such that the correct blocks are used to determine each bit.

To overcome this, the synchronisation processes of this coding and decoding is aligned to the start of a subset of blocks 13. Thus all the blocks on one subset of the selected blocks 13 are used to encode/decode the first bit. Then all the blocks within a second subset of the selected blocks 13 would encode/decode the second bit etc. This may be extended so that a subset of blocks is used to encode/decode each bit, which reduces the amount of information which could be inserted but improves the robustness to processing.

In a modification, and as preferred, a subset of blocks 13 contributing to a single bit may be distributed throughout an image according to a predetermined pattern. This has the advantage as compared with a line of selected blocks contributing to a bit, that at least some of the selected blocks may be sited where strongly featured regions occur, and all, are not located for example in a background region with no strong features.

To improve the accumulation of results from the individual blocks to determine a single bit, a psuedo random sequence (PRS) (but fixed sequence) of +1 or - 1 is used. A +1 means that the insertions is added to produce a convex functions, and -1 means that it is subtracted to produce a concave function. For the encoding process, each selected block is processed in turn, and the next element in the PRS determines whether the insertion is added or subtracted. There are two different sequences, one for the 1 data bit and one of the 0 data bit. Thus for the decoding process the concave/convex-ness of each selected block is correlated with both sequences, and the sequence which produces the highest correlation determines what the decoded data bit is.

A second method of coding is to code low-pass regions as well as edge regions. The low-pass regions are coded with circular insertions centred on the selected block. The insertions in this case are of a fixed strength, and not related to the activity in the block. This improves the robustness of the process.

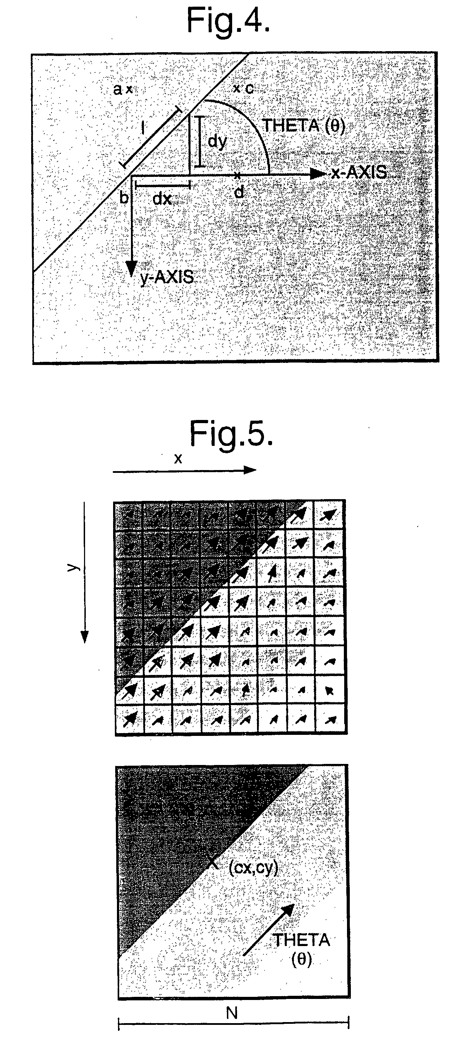

Referring to Figure 4, the local orientation for each point in each selected block 13 is calculated from four surrounding points by a process as described below. This gives a vector at each point in the selected block, with the magnitude of the vector representing the strength of the feature, and the angle representing twice the local orientation. This is illustrated in Figure 4. Thus the local orientation gives a measure of gradient of luminance in a particular direction within a selected block 13. A very large value of orientation indicates the existence of an edge; In this double angle form the vectors can be vector averaged over a block to give the local orientation for the selected block 13. This provides a relatively fast estimating algorithm.

e.g, as shown in Figure 4:

$\theta \sim$ -45degrees : by convention, $\theta$ is associated with point a = (x,y)
*-dx* ~ 0.7
*-dy*~-0.7

$\theta$ is estimated from

$$a = r(x, y)$$

$$b = r(x, y + 1)$$

$$c = r(x + 1, y)$$

$$d = r(x + 1, y + 1)$$

$$e = d - a$$

$$f = b - c$$

$$Re = -2*e*f$$

$$Im = e^2 - f^2$$

$$\theta = \frac{1}{2} \text{Tan}^{-1} \left( \frac{\text{Im}}{\text{Re}} \right)$$

$\theta$ is in single angle form
Re,Im are in double angle form

orientations are averaged in the Re,Im double angle form.

The calculation of the average block vector is simply a matter of summing the local vectors for the selected block, as shown in Figure 5. A large average block vector indicates a strong edge running through the block. The average energy in the block can be calculated by summing the magnitudes of the individual vectors. From these two figures, the local block orientation can be calculated by taking ½ the angle of the block vector, and a measure of block consistency calculated by taking the ratio of the magnitude of the block vector to the block energy.

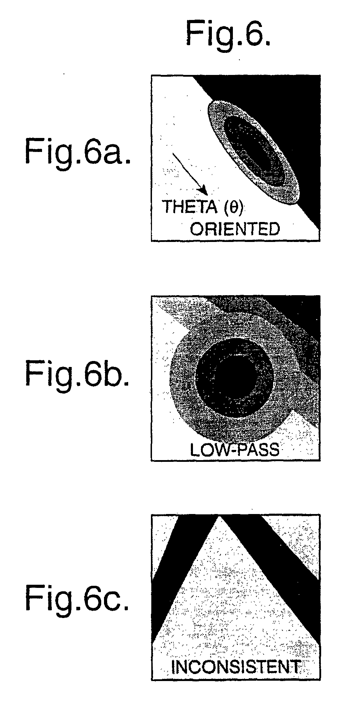

The local energy can be used to distinguish between selected blocks which have small activity (little variations in image) and selected blocks which have some activity. The consistency measure can be used to distinguish between blocks which have a consistent orientation and these which have a inconsistent orientation. This allows the blocks to be split into three categories as shown in Figure 6.

For selected blocks 13 with a consistent local orientation a centre of the edge needs to be calculated. The method is shown below with reference to Figure 5. Each individual vector is resolved into a component in the same orientation as the block orientation. Then the local centroid of these components is calculated in the orthogonal axis of the local orientation. This local centroid is the centre of the edge which is used to centre the insertion on the edge. During the calculation a variance is also calculated, which is used to determine if there are two edges in the same selected block, in which case the selected block is classified as inconsistent, and no insertion is made. This is to prevent the insertion being made half way between the two edges. An alternative strategy in this case would be to split the insertion and make two insertions, calculating the centres by a binary splitting local centroid algorithm.

Referring to Figure 5, the orientations are held as the real Re(x,y) and imaginary Im(x,y) components of the double angle form

they are averaged in this form

$$Re\_A = \sum_{x,y} Re(x,y)$$

$$Im\_A = \sum_{x,y} Im(x,y)$$

The energy of the selected block is calculated from

$$Strength = M\_A(k,l) = \sum_{x,y} \text{sqrt} \ (\ Re(x,y), Im(x,y) \ )$$

The local block orientation is calculated from

$$\theta(k,l) = \frac{1}{2} Tan^{-1} \left( \frac{Im\_A}{Re\_A} \right)$$

The block consistency is calculated from

$$\beta(k,l) = \frac{\text{sqrt}(Re\_A * Re\_A + Im\_A * Im\_A)}{M\_A(k,l)}$$

To calculate the centre point c(x,y)
translate coordinates to centre of block

$$x1 = x - \frac{N}{2}$$

$$y1 = y - \frac{N}{2}$$

rotate axis to local orientation

$$x2 = dx * x + dy * y$$

$$y2 = -dy * x + dx * y$$

calculate component of activity in block orientation

$$r = dx * \sin(\theta(x,y)) + dy * (-\cos(\theta(x,y)))$$

calculate local centroid of components

$$lcx = \frac{\sum\limits_{x,y}(r * x2)}{\sum\limits_{x,y}(r)}$$

$$lcy = \frac{\sum\limits_{x,y}(r * y2)}{\sum\limits_{x,y}(r)}$$

rotate and translate coordinates back

$$cx = dx * lcx - dy * lcy + \frac{N}{2}$$

$$cy = dy * lcx + dx * lcy + \frac{N}{2}$$

also calculate a variance figure

$$var = \frac{\sum\limits_{x,y}(r * y2 * y2 - lcy * lcy)}{\sum\limits_{x,y}r}$$

Figure 6 illustrates how the different block types are processed. The oriented blocks are given an elliptical insertion aligned with the edge within the block. The strength of the insertion is scaled by the energy within the block. The low energy blocks have a circular insertion, centred on the centre of the block, and with a fixed strength. They may also have a small dither to prevent contouring. Inconsistent blocks have no insertion.

The elliptical insertion function is calculated for each point within the block based on its distance from the centre point, by rotating to align a local axis with the block orientation, and scaling the y-axis to produce an elliptical rather than circular function, as shown in Figure 6. The cross sectional function of the insertion is a 1/2 cycle of a cos function. This insertion function is then used to weight the concave/convex-ness of the individual points, so as to limit the extent of the insertion.

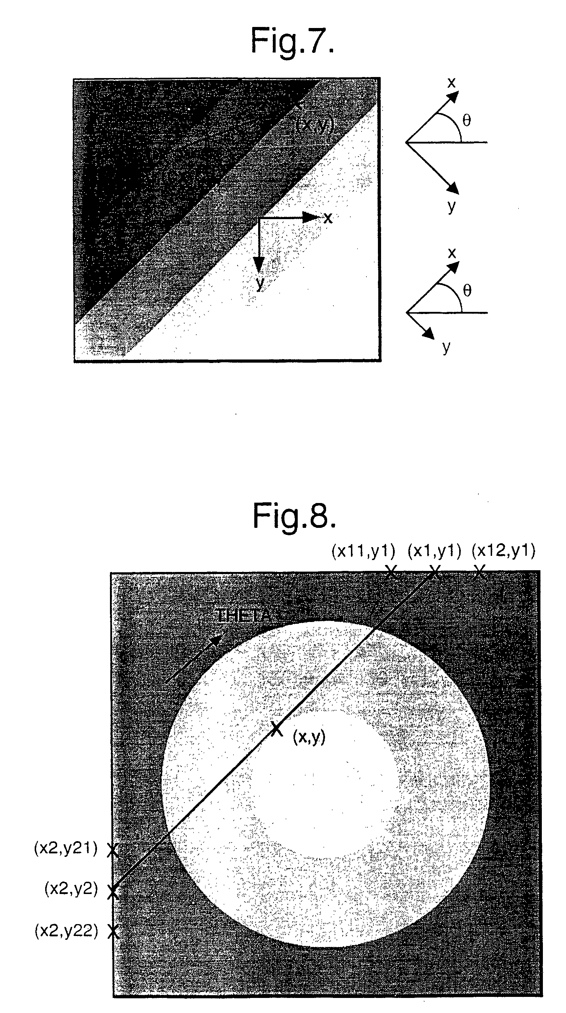

Referring to Figure 7, the insertion function is calculated as follows. Calculate the distance vector between point (x,y) and point (cx,cy)

$$x1 = x - cx$$

$$y1 = y - cy$$

Rotate the local axis to align with the local block orientation

$$x2 = dx * x1 + dy * y1$$

$$y2 = -dy * x1 + dx * y1$$

scale the y axis to produce an elliptical function in distance

$$y3 = y2 * ratio$$

calculate the radial distance of the point(x,y)

$$d = \frac{\sqrt{x2^2 + y3^2}}{MAX\_d}$$

calculate the insertion function

$$if(d > 1)d = 1$$

$$i(x,y) = 0.5 * (\cos(d * \pi) + 1)$$

The insert function is appropriately scaled by the block energy factor, M_A. Whilst the scaling may be a simple proportionality factor, other scalings may be envisaged. In general, the scaled insert factor, $i_S$, may be represented as:

$$(i(x,y), M\_A) \, i_S(x,y) = f$$

The calculation of the convex/concave-ness of a block is illustrated in Figure 8. The edge points of each selected block are used to estimate the inside points using a linear interpolation in the direction of the block orientation. The difference between the estimated value and the actual value then gives a +ve or -ve number. These numbers are then weighted by the insertion function and summed over the block to give a final +ve or -ve value for the block which indicated its concave or convex-ness.
Referring to Figure 7, predicted value at point (x,y)

$$p(x,y) = Lin(p(x1,y1),p(x2,y2))$$

$$p(x1,y1) = Lin(r(x11,y1),r(x12,y1))$$

$$p(x2,y2) = Lin(r(x2,y21),r(x2,y22))$$

concave/convexness of point (x,y)

$$c(x,y) = r(x,y) - p(x,y)$$

Overall concave/convexness of block(k,l), when scaled insert function is added:

$$C(k,l) = \sum_{x,y} c(x,y) * i_s(x,y)$$

The measure C of block concavity is a significant factor which is computed during the encoding process, and is employed during the decoding process to derive the inserted code.

In the encoding process, the measure C is computed , and a further factor is computed from C, as will be explained in more detail below to determine by how much the scaled insert function should be further scaled to produce the desired value of C in the individual encoded pixels which are transmitted.

In the decoding process, the existing concavity C of the image block is assessed (which will include the inserted scaled insert function ), and to this is added the concavity of the predicted insert function $i_S$. A correlation process is then employed to determine whether an insert function exists within the image.

By way of example, in a decoding process, measures of block concave/convex-ness are combined across a predefined subset of blocks in order to produce a reliable result for each bit. For example the measures from 4 successive selected blocks of the subset can be combined to produce each bit. The combination is done by correlating to one of two different pseudo-random sequences as shown below. The elements of the PRS are multiplied by the measures for successive blocks in the subset, and the results accumulated. This is done for both sequences. Then the largest of the two determines which bit is decoded, and ratio of the largest correlating value to the maximum possible one gives a measure of confidence that the correlation is correct. Note that a measure of confidence is only reliable for a large number of blocks in the subset.

EXAMPLE

- two correlation sequences e.g.

Zero : +1, -1, +1, +1, -1, +1, +1, +1, -1, -1, +1

One: -1, -1, -1, +1, +1, -1, +1, -1, +1, -1, +1

- correlated with C(x,y) e.g.

C(x,y): +0.2, -0.9, +0.1,

etc...

zero gives: (+1)*(+0.2) +(-1)* (-0.9) + (+1)* (+0.1) = +1.2

one gives: (-1)*(+0...2) + (-1)*(-0.9) + (-1)*(+0.1) = +0.6

sum gives: (+0.2) + (+0.9) + (+0.1) =+1.2

- Maximum of zero or one determines 0 or 1 bit decision

e.g. zero = +1.2 gives a 0 bit

- 100* (zero/sum) gives measure of confidence as a number up to a maximum of 100

e.g. 100* (zero/sum) = 100

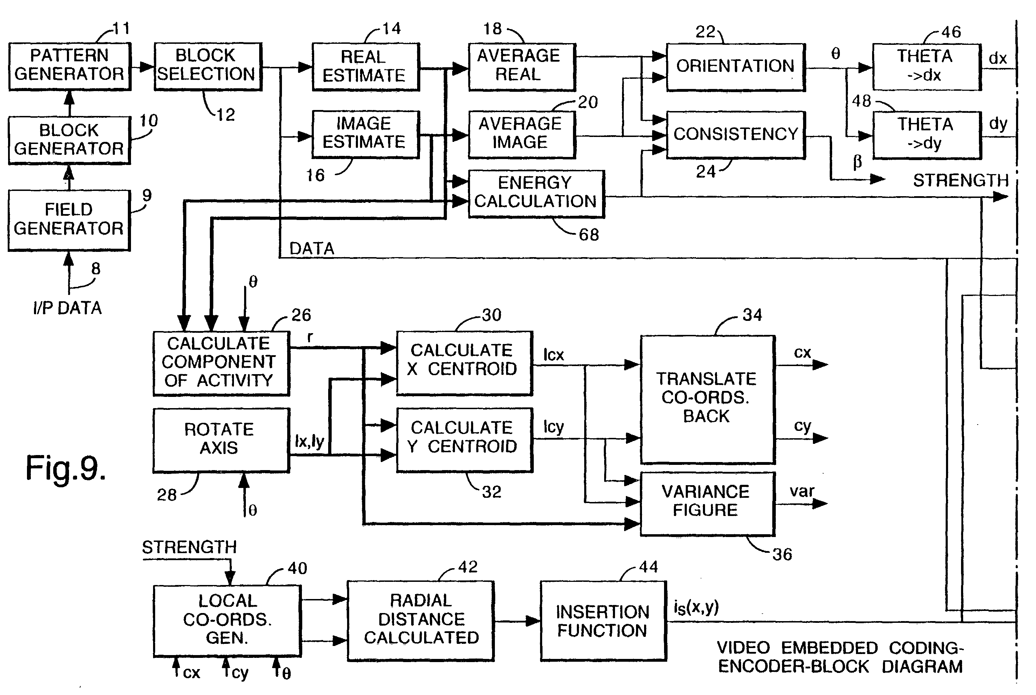

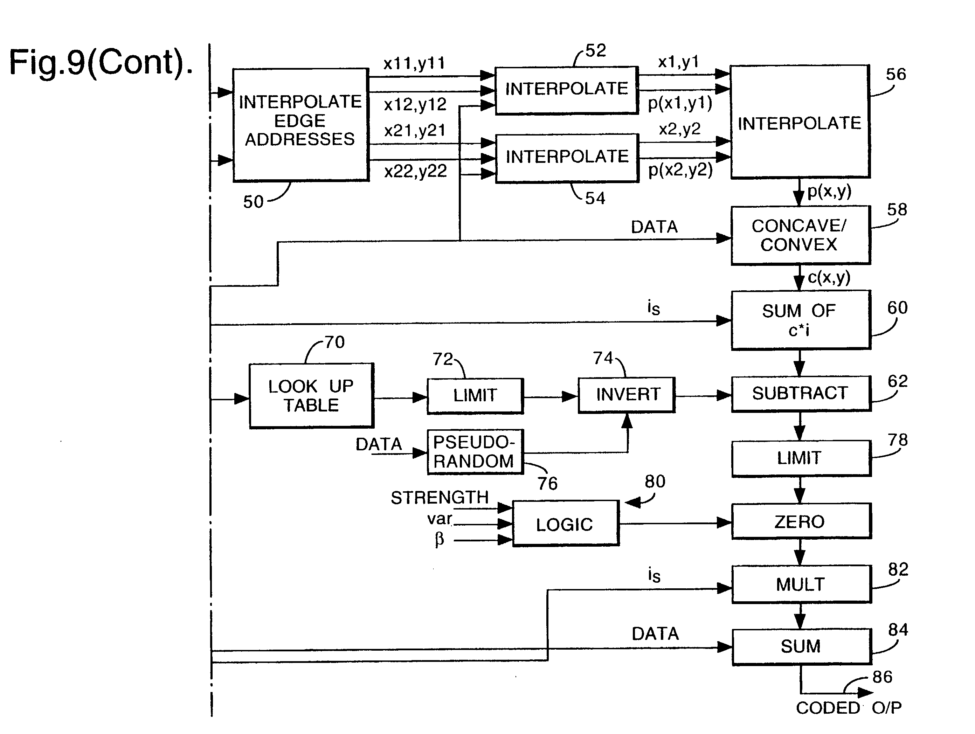

Referring now to Figure 9, which shows an encoder for encoding video images, video data is input on line 8 to a field generator 9 which effectively defines a plurality of fields and to a block defining device 10 which performs the task of dividing each field into a grid of blocks each of sixty four pixels. The block data is then processed by a pattern generator 11 and pattern sequencer 12 which serves to select a pattern of selected blocks 13 and the sequencer 12 defines subsets of the selected blocks 13. The data for each selected block is passed to two devices 14, 16 for estimating the local orientation of each point within a selected block and giving the real component Re_A of the orientation and the imaginary component Im_A of the orientation by a process of interpolation described with reference to Figure 4. The values are averaged in summing devices 18, to give average values for each selected block and from these average values, the block orientation θ is calculated as at 22 by dividing the angle of the block vector by two as described with reference to Figure 5. Signals Im_A and Re_A are applied as inputs to an energy calculation unit 68 which generates a signal Strength, representing the energy or strength of the featured regions in the selected block, in the manner described with reference to Figure 5. A measure of the consistency of orientation in the selected block is obtained as at 24 by taking the ratio of the magnitude of the block vector to the block energy. This provides an output β which is applied to a logic unit 80 to be described.

The block orientation unit 22 output θ is applied to devices 26, 28 together with the individual values of each vector from units 14,16 in order to perform the calculation described with reference to Figure 5 of calculating for each vector the component of activity parallel to the axis of the block orientation. In addition, device 28 rotates the coordinates of the vectors to be parallel with the block orientation vector. The centroid of the components is computed as at 30, 32 and outputs lcx, lcy are applied to unit 34 which is operative to translate the components back to the original x, y axes and provide centroid components cx, cy. In addition device 36 calculates a variance figure, var, as described with reference to Figure 5.

Devices 40, 42, 44 receive signals cx, cy, the block orientation θ, and the Strength signal. Devices 40, 42, 44 are operative to calculate the elliptical insertion function i as described with reference to Figure 7. The Strength signal is employed to scale the insert function and produce a scaled insert function $i_S$. The insertion function is employed to weight the amount of luminance applied to each pixel dependent on its radial position with reference to the edge centre.

Devices 46, 48, 50, 52, 54, 56 are employed to interpolate the pixel addresses of the edge and to estimate the existing concavity of the block. Firstly, a point within the block (x,y) is reconstituted from the orientation θ as at 46, 48. As described with reference to Figure 7, edge addresses x11 - x22 are estimated at 50 by a process of interpolation at the edge of the block, and the luminance values $p(x_{.1}, y_1)$, $p(x_2, y_2)$ are then estimated as at 52, 54 by a process of linear interpolation. The luminance of the point p(x, y) is then calculated by a further linear interpolation as at 56. The difference c(x, y) between the actual value r(x, y) and the estimated value p(x, y) is then found in subtractor 58. The value c(x, y) weighted by the insertion function i(x, y) and summed at 60 over the entire block gives a sum value C(k, l) representing the concavity of the entire block as described above.

As mentioned above, this value is employed directly in the decoding process. In the encoding process, this value is employed, as will now be described, to determine the weighting to be applied to the luminance of individual pixels. A value is derived representing the maximum strength of the insert which will not risk the insert becoming visible. This value is derived from a look up table 70 which is accessed by the Strength signal. The lookup table value is limited as at 72 and modulated as at 74 by the pseudo random code bit to be applied to the block. The result is then subtracted from the overall concavity figure C in subtractor 62. The result of the subtraction gives a multiplying factor representing by how much the insert function must be adjusted to give the appropriate luminance value for individual pixels. This value is limited at 78. If the multiplying factor is too great, creating the risk of a visible artefact, then the limiter 78 will return a maximum value only.

The multiplying factor is subject to a logical function at 80 which receives a control input from a logic block 81, which thresholds and combines inputs comprising the consistency angle β, the variance var, and the signal Strength from unit 68 to indicate whether the block is a suitable block for containing data. Effectively the units 80, 81 perform the function indicated in Figure 5 to assess whether the selected block is suitable for code insertion.

The scaled insert function $i_S$ is multiplied at unit 82 with the multiplying factor and summed at 84 on a pixel-by-pixel basis with the input data from unit 12 to provide a coded output signal as at 84.

In the case where a selected the block 13 is unsuitable for code insertion along an edge, in that the Strength signal indicates that the selected block 13 is of low activity as exemplified in Fig. 5b, then units 40-44 are adapted to compute a circular insert function. In the case where as indicated in Figure 5a, insertion along an edge is possible, then units 40 - 44 compute the elliptical insertion function $i_S$ defined above with reference to Figure 6.

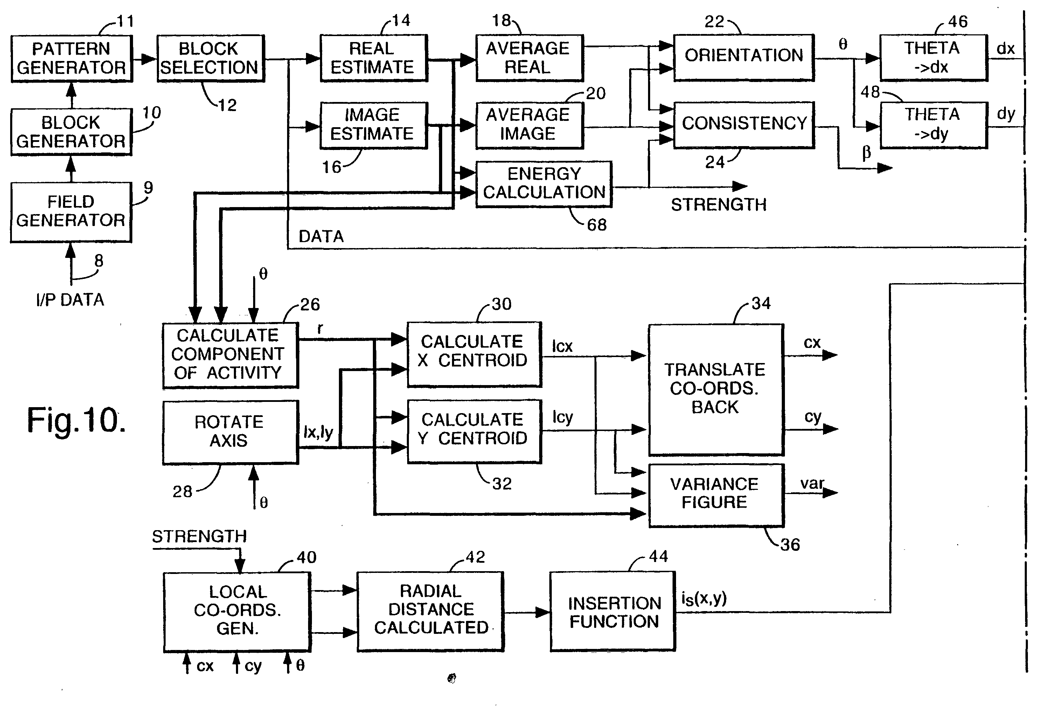

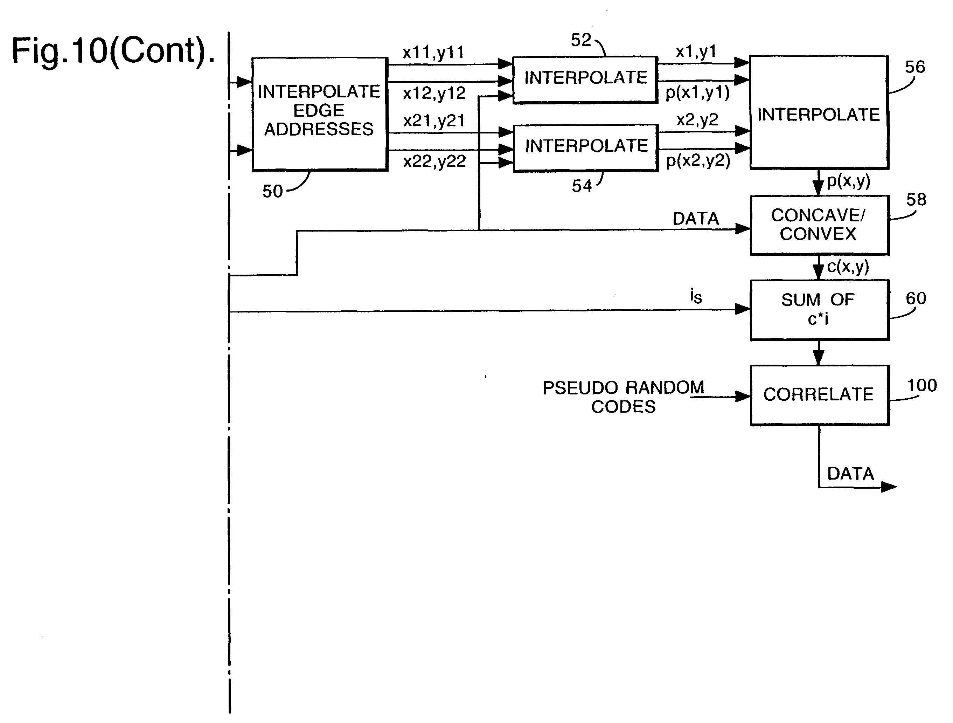

Referring now to Figure 10, the decoding section, which receives the coded output from the encoder, operates in a very similar manner and similar units are indicated by the same reference numeral. The essential difference is that units 70 - 82 of the encoder are omitted and are replaced in the decoder by unit 100, which is operative to perform the correlation function outlined above (see EXAMPLE ) with the pseudo random codes in order to decode the data. Thus the decoder computes the overall concavity of the block as at 58, and the anticipated scaled insert function $i_s$ These values are summed as at 60 to give a value for the whole block, and a correlation is performed in unit 100 with the two pseudo random codes representing the two possible binary values.

Whilst the above has been described as a preferred embodiment, other embodiments may be implemented. For example an embodiment will now be described for encoding textured regions.

ENCODER

1. An image is to be encoded containing textured regions comprising a random mixture of small localised areas having different chrominance values. For each field of the MxN blocks of the image, the texture statistical parameters are calculated by a cluster analysis process which produces clusters of chrominance values and the variance values for each cluster in each field. The number of clusters and cluster variances are used to identify blocks which consist of two (or more ) basic chrominance values (colours ) which are distributed in a random or relatively random pattern. The computed statistical parameters are used to identify the more intense "foreground" value. A threshold is set based on the statistical parameters, and used to identify pixels within all the blocks in the textured region of the field which belong to the foreground value.

2. A circular function centered on the centre of one of the blocks in the textured region of the field, with a maximum value at its centre and tapering to zero with an appropriate cross-sectional function, a 1/2 wave raised cosine function, is calculated. The magnitude of the circular function is set from the cluster statistics ( by means of empirical measurements), to maximise the insertion strength whilst limiting visibility. It is also limited by the existing concavity/convexity of the selected subset block, which is calculated as in the above described embodiment.

3. The insertion function thus calculated is applied to adjust the cluster value in a selected block 13 within the textured region of the field in a positive or negative manner depending on the existing concavity, according to the required sign. The adjustment is made only to those pixels in the selected block which have been identified as part of the foreground value of the textured region.

DECODER

1. As with step 1. of the Encoder, the statistical parameters of the all blocks in the textured region of the field are calculated to identify the "foreground" pixels.

2. For each identified foreground pixel , the distance from the centre of the selected block (circular insert function) is calculated.

3. All different combinations of pairs Pi of foreground pixels are determined, and for each pair Pi the nearer pixel to the centre is calculated. The difference in the intensity values Vi of each pair is computed by subtracting the value of the pixel nearer the centre from the value of the pixel further from the center. The difference Di in the distances of the pixels of each pair from the centre is also calculated.

4. A factor C is now computed = $\Sigma_i$ Vi*Di

5. C is now the estimate of concavity and is used as in the main embodiment as described above.

**Claims**

**1.** A method of invisibly embedding coded information in an image comprising the steps of

(a) analysing the image,

(b) dividing the image into a plurality of fields (1,2,3,4),

(c) dividing each field into N*M blocks each of n*m pixels,

(d) defining a predetermined sequence of different selection patterns, each of which selects a predetermined pattern of selected blocks (13) in a field (1,2,3,4), each pattern in the sequence being such that blocks selected in each pattern are not selected in a predetermined number of successive patterns immediately following in the sequence,

(e) applying the first selection pattern of the sequence to a selected field to select blocks in the selected field,

(f) applying the next successive pattern in the sequence to the next successive field to select blocks in that field,

(g) repeating step (f) over a predetermined number of fields for all patterns in the sequence,

(h) analysing each selected block (13) in each field and identifying strongly featured regions in each selected block, and,

(i) inserting coded information into said regions of each selected block (13), and,

(j) repeating steps (d) to (i) for a predetermined number of fields.

2. A method of encoding an image according to claim 1 wherein the sequence of patterns is repeated cyclically over a predetermined number of fields.

3. A method of encoding an image according to claim 2 wherein the sequence of patterns is repeated cyclically and blocks (13) are selected according to the function

$$(cfc + I + j)KP == 0$$

where I and j are the horizontal and vertical indices of the blocks in a field, K is a modulus, P is the number of patterns in the sequence, cfc is a predetermined cyclic field count, and blocks (13) are selected when the function is true and not when the function is false.

4. A method of encoding an image according to claim 2 or claim 3 wherein more than one subset of blocks (13) are selected in each field, and the blocks in each subset are embedded with a bit of code pertaining to one set of information, and the blocks in another subset are embedded with a bit of code pertaining to another set of information.

5. A method of encoding an image according to any one of claims 1 to 4, wherein the strongly featured regions comprise edge regions between areas of different luminance and/ or chrominance.

6. A method of encoding an image according to claim 5, wherein the strongly featured regions comprise textured regions having distributed therein localised areas of different luminance and/or chrominance values.

7. A method of encoding an image according to claim 6 comprising analysing a textured region of a field of the image by a process of cluster analysis, identifying a cluster of foreground local areas with a predetermined quality within the textured region of the field, and modifying the chrominance and, or, luminance values within one or more selected blocks located within the textured region of the field with an insert function, which decreases in intensity from its centre, for representing one of two binary values.

8. A method of encoding an image according to claim 7 wherein the insert function is circular in extent, centred on the geometric centre of the cluster within the textured region of the selected block.

9. A method of encoding an image according to claim 5, including the step of inserting along a length of the edge region of a selected block (13) an insert function whose intensity varies in a non-linear manner, for representing one of two binary values.

**10.** A method of encoding an image according to claim 9, wherein the insert function is elliptical in extent, with its intensity gradually decreasing in a direction along its major axis, and with its major axis extending along the length of the edge.

**11.** A method of encoding an image according to claim 10, wherein the elliptical function is centred on the centre of the edge within a selected block (13).

**12.** A method of encoding an image according to any of claims 5 to 7, wherein the insert function varies in intensity in a concave manner.

**13.** A method of encoding an image according to any one of claims 1 to 12, including identifying a masking parameter for a region in a field of the image, and limiting the intensity of the inserted code in each selected block (13) within that region in accordance with the masking parameter.

**14.** A method of encoding an image according to claim 13, wherein the masking parameter determination includes assessing the image as to the degree of strength or energy of the strongly featured region within the image, and determining the intensity of the code to be inserted in a selected block (13) in dependence on such strength assessment.

**15.** A method of encoding an image according to claim 13, including assessing a region of a field of the image as to whether the region contains an image function of a type similar to an insert function to be inserted in selected blocks (13) within the region, and assessing the intensity of the image function.

**16.** A method of encoding an image according to claim 15 wherein, if the said region of the field of the image contains said image function, the sum of said image function and the insert function is limited if the intensity of the image function is higher than a predetermined value.

**17.** A method of encoding an image according to any one of claims 1 to 12 comprising the step of determining for at least one region of a field of the image a masking parameter, and inserting into one or more selected blocks (13) located in said region, coded information in a predictable and identifiable manner by an amount limited in accordance with said masking parameter.

**18.** A method of encoding an image according to any of claims 13 to 16, wherein the masking parameter determination includes determining whether the strongly featured region of a field of the image is sufficiently well defined to permit insertion of coded information into a selected block (13) in said region of the image.

**19.** A method of encoding an image according to claim 1, including the step of calculating an insert function to be added to the luminance of each pixel within a selected block (13) based on the distance of the pixel from the central point of the edge.

**20.** A method of encoding an image according to claim 19, wherein an assessment is made of each selected block (13) to assess, whether it has a single strongly featured region, has several strongly featured regions, or is a block having low activity in terms of image information.

**21.** A method of encoding an image according to claim 19, wherein if a block (13) is assessed to have a low-activity, a code is inserted into the block defined by a geometric region where the pixels within the region have a luminance modulated according to a predetermined function.

**22.** A method of decoding invisibly embedded coded information in an image comprising the steps of

(a) analysing the image,

(b) dividing the image into a plurality of fields (1,2,3,4),

(c) dividing each field into N*M blocks each of n*m pixels,

(d) defining a predetermined sequence of different selection patterns, each of which selects a predetermined pattern of selected blocks (13) in a field, each pattern in the sequence being such that blocks selected in each pattern are not selected in a predetermined number of successive patterns immediately following in the sequence,

(e) applying the first selection pattern of a sequence to a selected field to identify selected blocks in the selected field,

(f) applying the next successive pattern in the sequence to the next successive field to identify selected blocks in that field,

(g) repeating step (f) over a predetermined number of fields for all patterns in the sequence,

(h) analysing each identified selected block in each field and identifying strongly featured regions in each selected block, and,

(i) decoding information contained in said regions of each selected block, and,

(j) repeating steps (d) to (i) over a predetermined number of fields.

23. A method of decoding an image according to claim 22, including the step of determining the intensity of an anticipated insert function in accordance with a masking parameter based on the strength or energy of a strongly featured region of the overall image.

24. A method of decoding an image according to claim 22, including assessing each selected block (13) as to whether the block contains a function of the type of which the coded information is inserted, assessing the degree of such function, and correlating an anticipated insertion with the image.

25. A method of decoding an image according to claim 22, comprising analysing a textured region of a field of the image by a process of cluster analysis, identifying a cluster of foreground local areas with a certain quality, and determining whether there exists a selected block (13) located within the textured region having an insert function consisting of a modification of the chrominance and/or luminance values of a cluster which decreases in intensity from its centre for representing one of two binary values, and decoding the binary values.

26. A method of decoding an image according to claim 25, wherein the insert function is circular in extent, and is centred on the geometric centre of the cluster.

27. A method of decoding an image according to claim 22, including the step of determining whether there exists along a length of an edge region within a selected block (13), an insert function whose intensity varies in a non-linear manner, for representing one of two binary values, and decoding the binary values.

28. A method of decoding an image according to claim 22, wherein a subset of selected blocks (13), selected according to said sequence of selection patterns, are decoded according to a pseudo random sequence, the blocks in the subset representing one or more bits of information.

29. A method of decoding an image according to claim 22 including the step of determining if a block (13) has a low activity, and detecting a code inserted into the block defined by a geometric region where the pixels within the region have a luminance modulated according to a predetermined function.

30. Apparatus for invisibly embedding coded information in an image comprising, image processing means (9,10) for analysing the image, dividing the image into a plurality of fields, and dividing each field into N*M blocks each of n*m pixels, pattern defining means (11,12) operable to define a predetermined sequence of different selection patterns, each of which, in operation, selects a predetermined pattern of selected blocks (13) in a field, each pattern in the sequence being such that, in operation, blocks selected in each pattern are not selected in a predetermined number of successive patterns immediately following in the sequence, block selection means (14,16) for applying the first selection pattern of a sequence to a selected field to select blocks in the selected field, said block selection means being operable to apply the next successive pattern in the sequence to the next successive field to select blocks in that field block analysing means for analysing each selected block in each field and operable to identify strongly featured regions in each selected block, and code insertion means (80 to 84) operable to insert coded information into said regions of each selected block.

31. Apparatus for encoding an image according to claim 30 wherein the pattern defining means (11,12) is operable to repeat the sequence of patterns cyclically for a predetermined number of fields.

32. Apparatus for encoding an image according to claim 31 wherein the blocks are selected according to the function

$$(cfc + I + j)KP == 0$$

where I and j are the horizontal and vertical indices of the blocks in a field, K is a modulus, P is the number of patterns in the sequence, cfc is a predetermined cyclic field count, and blocks are selected when the function is true and not when the function is false.

33. Apparatus for encoding an image according to any one of claims 30 to 32 wherein more than one subset of selected blocks (13) are selected in each field, and the code insertion means (80 to 84) operates on each subset to insert a bit of code pertaining one set of information and to insert into blocks in another subset being embedded a bit of code pertaining to another set of information.

34. Apparatus for encoding an image according to claim 33, wherein the image processing means (9,10) is operable to identify edge regions between areas of different luminance and/ or chrominance.

35. Apparatus for encoding an image according to claim 33, wherein the image processing means (9,10) is operable to identify textured regions of a field of the image having distributed therein localised areas of different luminance and/or chrominance values.

36. Apparatus for encoding an image according to any of claims 30 to 35, wherein the code insertion means (80 to 84) is operable to alter the structure of the image in a predictable or identifiable manner so that the coded information can subsequently be retrieved without reference to the original image.

37. Apparatus for encoding an image according to claim 36, wherein said image processing means (9,10) is operable to analyse a textured region of a region of a field of the image by a process of cluster analysis, by identifying a cluster of foreground local areas with a certain quality, and the code insertion means (80 to 84) is operable to modify the chrominance and/or luminance values of the cluster of a selected block within said region with an insert function which decreases in intensity from its centre, for representing one of two binary values.

38. Apparatus according to claim 37, wherein said code insertion means (80 to 84) is operable to insert along a length of the edge region an insert function whose intensity varies in a non-linear manner, for representing one of two binary values.

39. Apparatus according to claim 38, wherein the insert function is elliptical in extent, with its intensity gradually decreasing in a direction along its major axis, and with its major axis extending along the length of the edge.

40. Apparatus for encoding an image according to claim 39, wherein the elliptical function is centred on the centre of the edge.

41. Apparatus according to any of claims 30 to 38, wherein the insert function varies in intensity in a concave manner.

42. Apparatus for encoding an image according to claim 30, wherein the image processing means (9,10) includes means for identifying a masking parameter for the image, and limiting the intensity of the inserted code in accordance with the masking parameter so that the inserted code is invisible.

43. Apparatus for encoding an image according to claim 42, wherein the image processing means (9,10) includes means for determining for at least one such region a masking parameter, and means for inserting coded information (80 to 84) into such region in a predictable or identifiable manner by an amount limited in accordance with said masking parameter.

44. Apparatus according to claim 43, wherein the means for determining the masking parameter includes means for assessing the image as to the degree of activity or energy within the image.

45. Apparatus according to claim 43 or 44, wherein the means for determining the masking parameter includes means for assessing the image as to whether the image overall contains a function of the type of which the coded information is inserted, and assessing the degree of such function.

46. Apparatus according to claim 30, wherein the insertion means (80 to 84) is operative to insert coded information employing a concave function.

47. Apparatus according to claim 45, including means for limiting the total intensity if the sum of the intensity of the coded information and the intensity of the function in the overall image is too great.

48. Apparatus according to any of claims 42 to 47, wherein the masking parameter means includes means for determining whether the strongly featured region is sufficiently well defined to permit insertion of coded information.

49. Apparatus according to claim 48, wherein the code insertion means (80 to 84) includes means for encoding a subset of the selected according to a pseudo random sequence so that the blocks (13) in the subset represent one or more bits of information.

50. Apparatus according to claim 49, wherein the image processing means (9,10) includes means for calculating an insert function to be added to the luminance of each pixel within the block based on the distance of the pixel from the central point of the edge.

51. Apparatus for encoding an image according to claim 50, wherein the image processing means (9,10) is operable to assess the type of image within each selected block (13), whether it has a single strongly featured region, has more than one strongly featured region, or is a block having low activity in terms of image information.

52. Apparatus according to claim 51 wherein the code insertion means is arranged to insert a code into a block (13) assessed to have a low activity, the code defined by a geometric region wherein the pixels within the region have a luminance modulated according to a predetermined function.

53. Apparatus for decoding invisibly embedded coded information in an image comprising analysing means (9,10) for analysing the image, dividing the image into a plurality of fields, and dividing each field into N*M blocks each of n*m pixels, pattern defining means operable to define a predetermined sequence of predetermined different selection patterns, and thereby select a predetermined pattern of selected blocks (13) in a field to be decoded, said patterns in the sequence being such that blocks selected in each pattern are not selected in a predetermined number of successive patterns immediately following in the sequence, pattern selection means (11,12) operable to apply the first selection pattern of a sequence to a selected field to identify selected blocks in the selected field and said block selection means being operable to apply the next successive pattern in the sequence to the next successive field to identify selected blocks in that field, and decoding means (14 to 58) operable to analyse each identified selected block in each field, identify strongly featured regions in each selected block where an anticipated insert of coded information may be embedded locate said insert within said selected block, and, decode information contained in said insert.

54. Apparatus for decoding an image according to claim 53 wherein the pattern defining means is operable to repeat the sequence of patterns cyclically for a predetermined number of fields.

55. Apparatus according to claim 53 wherein the pattern defining means is operable to select blocks according to the function

$$(cfc + I + j)KP == 0$$

where I and j are the horizontal and vertical indices of the blocks in a field, K is a modulus, P is the number of patterns in the sequence, cfc is a predetermined cyclic field count, and blocks are selected when the function is true and not when the function is false.

56. Apparatus for decoding an image according to any one of claims 53 to 55, wherein the decoding means (14 to 58) includes assessing means for assessing the image as to whether the image overall contains a function of the type of which the coded information is inserted and for assessing the degree of such parameter, and said correlation means is operative to correlate such assessments with the anticipated insertion.

57. Apparatus according to claim 56, wherein the assessing means is arranged to assess a concave parameter.

58. Apparatus according to claim 56, wherein the assessing means includes a masking parameter determination means for determining whether the strongly featured region is sufficiently well defined to have permitted insertion of coded information.

59. Apparatus according to claim 53, wherein the decoding means (14 to 58) is arranged to identify edge regions between areas of different luminance and/ or chrominance of each selected block (13).

60. Apparatus for decoding an image according to claim 53, wherein the decoding means (14 to 58) is arranged to identify textured regions having distributed therein localised areas of different luminance and/or chrominance values.

61. Apparatus according to claim 60, wherein the decoding means (14 to 58) is arranged to analyse a textured region of a field of the image by a process of cluster analysis, to identify a cluster of foreground local areas with a certain quality, and the decoding means includes an estimating means is arranged to determine whether there exists a modification of the chrominance and/or luminance values within a selected block (13) corresponding to an insert function which decreases in intensity from its centre, for representing one of two binary values.

62. Apparatus for decoding an image according to claim 61, wherein the estimating means is arranged to determine an insert function circular in extent, and centred on the geometric centre of the cluster.

63. Apparatus according to claim 61, wherein the estimating means is arranged to determine along a length of the edge region an insert function whose intensity varies in a non-linear manner, for representing one of two binary values.

64. Apparatus for decoding an image according to claim 61, wherein the estimating means is arranged to determine an insert function elliptical in extent, with its intensity gradually decreasing in a direction along its major axis, and with its major axis extending along the length of the edge.

65. Apparatus for decoding an image according to any of claims 61 to 64, wherein the estimating means is arranged to determine an insert function which varies in intensity in a concave manner.

66. Apparatus for decoding an image according to claim 61, wherein the decoding means (14 to 58) and estimating means are arranged to select a subset of selected blocks, for decoding according to a pseudo random sequence, the blocks in the group representing one or more bits of information.

67. Apparatus for decoding an image according to claim 53 wherein the decoding means (14 to 58) includes assessing means for assessing the type of image within each selected block, whether it has a single strongly featured region, has several such regions, or is a block having low activity in terms of image information.

68. Apparatus for decoding an image according to claim 53 wherein the estimating means is arranged to detect a code inserted into a low activity block (13) defined by a geometric region wherein the pixels within the region have a luminance modulated according to a predetermined function.

69. Apparatus for decoding an image according to claim 68, wherein the decoding means (14 to 58) is arranged to detect a circular insert with a concave variation of intensity in a radial direction.

70. Apparatus according to claim 69, wherein the strongly featured regions comprise edge regions between areas of different luminance and/or chrominance, or textured regions having distributed therein localised areas of different luminance and/or chrominance.

71. Apparatus according to claim 69 0r claim 70, including analysing means for determining in each block (13), weakly featured or background regions, and if identified, said detecting means is arranged to detect an appropriate insert function in such region.

**72.** Apparatus according to claim 71, wherein the insert function is a relatively large region having a constant or slowly varying luminance over its area.

**73.** Apparatus for decoding an image according to claim 53, wherein the insert function is circular having an intensity which varies in a concave manner in a radial direction.

**Patentansprüche**

**1.** Verfahren zum unsichtbaren Einbetten kodierter Information in ein Bild umfassend die folgenden Schritte:

(a) Analysieren des Bildes,
(b) Aufteilen des Bildes in eine Mehrzahl von Feldern (1, 2, 3, 4),
(c) Aufteilen jedes Feldes in N*M Blöcke zu je n*m Pixeln,
(d) Definieren einer vorbestimmten Sequenz (Folge) verschiedener Auswahlmuster, von denen jedes ein vorbestimmtes Muster ausgewählter Blöcke (13) in einem Feld (1, 2, 3, 4) auswählt, wobei jedes Muster in der Sequenz so ausgebildet ist, dass die in jedem Muster ausgewählten Blöcke nicht in einer vorbestimmten Anzahl aufeinanderfolgender, in der Sequenz unmittelbar aufeinander folgender Muster ausgewählt werden,
(e) Anwenden des ersten Auswahlmusters der Sequenz bei einem ausgewählten Feld, um Blöcke in dem ausgewählten Feld auszuwählen,
(f) Anwenden des nächstfolgenden Musters in der Sequenz bei dem nächstfolgenden Feld, um in diesem Feld Blöcke auszuwählen,
(g) Wiederholen von Schritt (f) über eine vorbestimmte Anzahl von Feldern für alle Muster in der Sequenz,
(h) Analysieren jedes ausgewählten Blocks (13) in jedem Feld und Identifizieren von merkmalsreichen Regionen in jedem ausgewählten Block, und
(i) Einsetzen kodierter Information in die genannten Bereiche jedes ausgewählten Blocks (13), und
(j) Wiederholen der Schritte (d) bis (i) für eine vorbestimmte Anzahl von Feldern.

**2.** Verfahren zum Kodieren eines Bildes nach Anspruch 1, wobei die Sequenz der Muster zyklisch über eine vorbestimmte Anzahl von Feldern wiederholt wird.

**3.** Verfahren zum Kodieren eines Bildes nach Anspruch 2, wobei die Sequenz der Muster zyklisch wiederholt wird und Blöcke (13) entsprechend der Funktion

$$(cfc + I + j) \, KP = 0$$

ausgewählt werden, wobei I und j die horizontalen und vertikalen Indizes der Blöcke in einem Feld sind, K ein Modul ist, P die Anzahl der Muster in der Sequenz ist, cfc eine vorbestimmte zyklische Feldzählung ist und die Blöcke (13) ausgewählt werden, wenn die Funktion wahr ist, und nicht wenn die Funktion falsch ist.

**4.** Verfahren zum Kodieren eines Bildes nach Anspruch 2 oder 3, wobei mehr als eine Teilmenge von Blöcken (13) in jedem Feld ausgewählt wird, und wobei in die Blöcke in jeder Teilmenge ein Code-Bit eingebettet wird, das zu einem Satz von Informationen gehört, und in die Blöcke in einer anderen Teilmenge ein Code-Bit eingebettet wird, das zu einem anderen Satz von Informationen gehört.

**5.** Verfahren zum Kodieren eines Bildes nach einem der Ansprüche 1 bis 4, wobei die merkmalsreichen Regionen Randregionen zwischen Bereichen verschiedener Luminanz und/oder Chrominanz umfassen.

**6.** Verfahren zum Kodieren eines Bildes nach Anspruch 5, wobei die merkmalsreichen Bereiche texturierte Regionen mit darin verteilten lokalisierten Bereichen verschiedener Luminanz- und/oder Chrominanz-Werte umfassen.

**7.** Verfahren zum Kodieren eines Bildes nach Anspruch 6, umfassend: Analysieren einer texturierten Region eines Feldes des Bildes mittels eines Bündel-Analyse-Prozesses (cluster analysis), Identifizieren eines Bündels (Clusters) von im Vordergrund lokalisierten Bereichen mit einer vorbestimmten Qualität in der texturierten Region des Feldes und Modifizieren der Chrominanz- und/oder Luminanz-Werte in einem oder mehreren ausgewählten, in der texturiertenm Region des Feldes befindlichen Blöcken, mit einer Einfüge(Insert-)Funktion, deren Intensität von ihrem Mittelpunkt aus abnimmt, zum Darstellen eines von zwei binären Werten.

8. Verfahren zum Kodieren eines Bildes nach Anspruch 7, wobei die Insert-Funktion von kreisförmiger Ausdehnung ist, zentriert auf den geometrischen Mittelpunkt des Clusters in der texturierten Region des ausgewählten Blocks.

9. Verfahren zum Kodieren eines Bildes nach Anspruch 5, umfassend den Schritt des Einfügens einer Insert-Funktion entlang einer Länge der Randregion eines ausgewählten Blocks (13), deren Intensität in nicht-linearer Weise variiert, zum Darstellen eines von zwei binären Werten.

10. Verfahren zum Kodieren eines Bildes nach Anspruch 9, wobei die Insert-Funktion von elliptischer Ausdehnung mit graduell abnehmender Intensität in einer Richtung entlang ihrer Hauptachse ist, und wobei sich ihre Hauptachse längs am Rand entlang erstreckt.

11. Verfahren zum Kodieren eines Bildes nach Anspruch 10, wobei die elliptische Funktion auf der Mitte des Randes in einem ausgewählten Block (13) zentriert ist.

12. Verfahren zum Kodieren eines Bildes nach einem der Ansprüche 5 bis 7, wobei die Insert-Funktion in konkaver Form in der Intensität variiert.

13. Verfahren zum Kodieren eines Bildes nach einem der Ansprüche 1 bis 12, beinhaltend.die Identifizierung eines Maskierungs-Parameters für eine Region in einem Feld des Bildes und Limitieren der Intensität des in jeden ausgewählten Block (13) eingefügten Codes innerhalb der Region in Übereinstimmung mit dem Maskierungs-Parameter.

14. Verfahren zum Kodieren eines Bildes nach Anspruch 13, wobei die Maskierungs-Parameter-Bestimmung beinhaltet: Bewerten des Bildes in Bezug auf den Grad an Stärke oder Energie der merkmalsreichen Region in dem Bild, und Bestimmen der Intensität des in einen ausgewählten Block (13) einzufügenden Codes, in Abhängigkeit von der Abschätzung seiner Stärke.

15. Verfahren zum Kodieren eines Bildes nach Anspruch 13, beinhaltend: Bewerten einer Region eines Feldes des Bildes in Bezug darauf, ob die Region eine Bildfunktion eines Typs ähnlich einer in ausgewählte Blöcke (13) einzufügenden Insertfunktion in der Region umfasst, und Bewerten der Intensität der Bildfunktion.

16. Verfahren zum Kodieren eines Bildes nach Anspruch 15, wobei - falls die Region des Bildfeldes die genannte Bildfunktion enthält - die Summe der Bildfunktion und der Insertfunktion begrenzt wird, wenn die Intensität der Bildfunktion größer ist als ein vorbestimmter Wert.

17. Verfahren zum Kodieren eines Bildes nach Anspruch 1 bis 12, umfassend den Schritt der Bestimmung eines Maskierungs-Parameters für zumindest eine Region eines Feldes des Bildes, und Einfügen kodierter Information in einen oder mehrere in der Region angeordnete ausgewählte Blöcke (13) auf eine vorhersehbare und identifizierbare Weise in einem gemäß dem Maskierungs-Parameter begrenzten Ausmaß.

18. Verfahren zum Kodieren eines Bildes nach einem der Ansprüche 13 bis 16, wobei die Maskierungs-Parameter-Bestimmung einschließt: Bestimmen, ob die merkmalsreiche Region eines Feldes des Bildes ausreichend gut definiert ist, um das Einfügen kodierter Information in einen ausgewählten Block (13) in der Region des Bildes zu erlauben.

19. Verfahren zum Kodieren eines Bildes nach Anspruch 1, beinhaltend den Schritt der Berechnung einer zur Luminanz jedes Pixels innnerhalb eines ausgewählten Blocks (13) hinzu zu addierenden Insertfunktion, basierend auf dem Abstand des Pixels vom Mittelpunkt des Randes.

20. Verfahren zum Kodieren eines Bildes nach Anspruch 19, wobei eine Bewertung jedes ausgewählten Blocks (13) stattfindet, um abzuschätzen, ob er eine einzige merkmalsreiche Region besitzt, oder mehrere merkmalsreiche Regionen, oder ob er ein Block mit geringer Aktivität im Sinne von Bildinformation ist.

21. Verfahren zum Kodieren eines Bildes nach Anspruch 19, wobei - falls ein Block (13) mit einer geringen Aktivität bewertet worden ist - ein Code eingefügt wird in den Block definiert durch eine geometrische Region, wo die Pixel innerhalb der Region eine entsprechend einer vorbestimmten Funktion modulierte Luminanz besitzen.

22. Verfahren zum Dekodieren unsichtbar in ein Bild eingefügter codierter Informationen, umfassend die Schritte:

(a) Analysieren des Bildes,

(b) Aufteilen des Bildes in eine Vielzahl von Feldern (1, 2, 3, 4),

(c) Aufteilen jedes Feldes in N*M Blöcke zu je n*m Pixeln,

(d) Definieren einer vorbestimmten Sequenz verschiedener Auswahlmuster, von denen jedes ein vorbestimmtes Muster ausgewählter Blöcke (13) in einem Feld auswählt, wobei jedes Muster in der Sequenz so ausgebildet ist, dass die in jedem Muster ausgewählten Blöcke nicht in einer vorbestimmten Anzahl aufeinanderfolgender, in der Sequenz unmittelbar aufeinander folgender Muster ausgewählt werden,

(e) Anwenden des ersten Auswahlmusters der Sequenz bei einem ausgewählten Feld, um ausgewählte Blöcke in dem ausgewählten Feld zu identifizieren,

(f) Anwenden des nächstfolgenden Musters in der Sequenz bei dem nächstfolgenden Feld, um in diesem Feld ausgewählte Blöcke zu identifizieren,

(g) Wiederholen von Schritt (f) über eine vorbestimmte Anzahl von Feldern für alle Muster in der Sequenz,

(h) Analysieren jedes identifizierten ausgewählten Blocks in jedem Feld und Identifizieren von merkmalsreichen Regionen in jedem ausgewählten Block, und

(i) Dekodieren der in diesen Regionen jedes ausgewählten Blocks enthaltenen Informationen, und

(j) Wiederholen der Schritte (d) bis (i) über eine vorbestimmte Anzahl von Feldern.

23. Verfahren zum Dekodieren eines Bildes nach Anspruch 22, beinhaltend den Schritt des Bestimmens der Intensität einer vorausgesehenen Insertfunktion in Übereinstimmung mit einem auf der Stärke oder Energie einer merkmalsreichen Region des gesamten Bildes basierenden Maskierungs-Parameter.

24. Verfahren zum Dekodieren eines Bildes nach Anspruch 22, beinhaltend die Bewertung jedes ausgewählten Blocks (13), ob der Block eine Funktion des Typs enthält, nach dem kodierte Informationen eingefügt wurden, Abschätzen des Ausmaßes einer solchen Funktion und Korrelation einer vorausgesehenen Einfügung mit dem Bild.

25. Verfahren zum Dekodieren eines Bildes nach Anspruch 22, umfassend: Analysieren einer texturierten Region eines Feldes des Bildes mittels eines Bündel-Analyse-Prozesses (cluster analysis), Identifizieren eines Bündels (Clusters) von im Vordergrund lokalisierten Bereichen mit einer bestimmten Qualität, und Bestimmen, ob innnerhalb der texturierten Region ein ausgewählter Block (13) mit einer Insertfunktion vorhanden ist, die aus einer Modifikation der Chrominanz- und/oder Luminanzwerte eines Clusters besteht, dessen Intensität von ihrem Mittelpunkt her abnimmt, zum Darstellen eines von zwei binären Werten, und Dekodieren der Binärwerte.

26. Verfahren zum Dekodieren eines Bildes nach Anspruch 25, wobei die Insertfunktion von kreisförmiger ausdehnung und auf dem geometrischen Mittelpunkt des Clusters zentriert ist.

27. Verfahren zum Dekodieren eines Bildes nach Anspruch 22, beinhaltend den Schritt des Bestimmens, ob entlang der Länge einer Randregion innerhalb eines ausgewählten Blocks (13) eine Insertfunktion vorhanden ist, deren Intensität in nicht-linearer Weise variiert, um einen von zwei Binärwerten darzustellen, und Dekodieren der Binärwerte.

28. Verfahren zum Dekodieren eines Bildes nach Anspruch 22, wobei eine Teilmenge ausgewählter Blöcke (13), die entsprechend der Reihenfolge der Auswahlmuster ausgewählt wurden, gemäß einer Pseudo-Zufalls-Sequenz dekodiert werden, wobei die Blöcke in der Teilmenge eines oder mehrere Bits an Information repräsentieren.

29. Verfahren zum Dekodieren eines Bildes nach Anspruch 22, beinhaltend den Schritt des Bestimmens, ob ein Block (13) eine geringe Aktivität besitzt, und Feststellen eines in den durch eine geometrische Region definierten Block eingefügten Codes, wo die Pixel in der Region eine entsprechend einer vorbestimmten Funktion modulierte Luminanz besitzen.

30. Vorrichtung zum unsichtbaren Einfügen kodierter Information ein in Bild, umfassend: Bildverarbeitungsmittel (9, 10) zum Analysieren des Bildes, Aufteilen des Bildes in eine Mehrzahl von Feldern und Aufteilen jedes Feldes in N*M Blöcke zu je n*m Pixeln, Muster-Bestimmungsmittel (11, 12), die in der Lage sind, eine vorbestimmte Sequenz verschiedener Auswahlmuster zu definieren, von denen jedes im Betrieb ein vorbestimmtes Muster ausgewählter Blöcke (13) in einem Feld auswählt, wobei jedes Muster in der Sequenz so beschaffen ist, dass - im Betrieb - in jedem Muster ausgewählte Blöcke nicht in einer vorbestimmten Anzahl aufeinanderfolgender, in der Sequenz unmittelbar aufeinander folgender Muster ausgewählt werden, Blockauswahlmittel (14, 16) zum Anwenden des ersten Auswahlmusters einer Sequenz bei einem ausgewählten Feld, um in dem ausgewählten Feld Blöcke auszuwählen, wobei die Blockauswahlmittel in der Lage sind, das nächst folgende Muster in der Sequenz bei dem nächst folgenden Feld anzuwenden, um Blöcke in dem Feld-Block-Analysierungsmittel zum Analysieren jedes ausgewählten Blocks in jedem Feld auszuwählen, und in der Lage ist, merkmalsreiche Regionen in jedem ausgewählten Block zu identifizieren, und Code-Einfügungs-mittel (80 bis 84), die in der Lage sind, kodierte Information in die Regionen jedes ausgewählten Blocks einzufügen.

31. Vorrichtung zum Kodieren eines Bildes nach Anspruch 30, wobei das Muster-Bestimmungsmittel (11, 12) in der Lage ist, die Sequenz der Muster für eine vorbestimmte Anzahl von Feldern zyklisch zu wiederholen.

32. Vorrichtung zum Kodieren eines Bildes nach Anspruch 31, wobei die Blöcke entsprechend der Funktion

$$(cfc + I + j) \, KP == 0$$

ausgewählt werden, wobei I und j die horizontalen und vertikalen Indizes der Blöcke in einem Feld sind, K ein Modul ist, P die Anzahl der Muster in der Sequenz ist, cfc eine vorbestimmte zyklische Feldzählung ist und die Blöcke ausgewählt werden, wenn die Funktion wahr ist, und nicht wenn die Funktion falsch ist.

33. Vorrichtung zum Kodieren eines Bildes nach einem der Ansprüche 30 bis 32, wobei mehr als eine Teilmenge ausgewählter Blöcke (13) in jedem Feld ausgewählt werden, und wobei die Code-Einfügungsmittel (80 bis 84) auf jede Teilmenge einwirken, um ein Code-Bit entsprechend einem Satz von Informationen einzufügen, und um in Blöcke in einer anderen eingebetteten Teilmenge einen Bit-Code entsprechend einem anderen Satz von Informationen einzufügen.

34. Vorrichtung zum Kodieren eines Bildes nach Anspruch 33, wobei die Bildverarbeitungsmittel (9, 10) in der Lage sind, Randregionen zwischen Bereichen verschiedener Lunimanz und/oder Chrominanz zu identifizieren.

35. Vorrichtung zum Kodieren eines Bildes nach Anspruch 33, wobei die Bildverarbeitungsmittel (9, 10) in der Lage sind, texturierte Regionen eines Feldes des Bildes mit darin verteilten lokalisierten Bereichen verschiedener Luminanzund/oder Chrominanzwerte zu identifizieren.

36. Vorrichtung zum Kodieren eines Bildes nach einem der Ansprüche 30 bis 35, wobei die Code-Einfügungsmittel (80 bis 84) in der Lage sind, die Struktur des Bildes in vorhersehbarer oder identifizierbarer Weise zu verändern, so dass die kodierte Information ohne Bezugnahme auf das Originalbild später wiedergewonnen werden kann.

37. Vorrichtung zum Kodieren eines Bildes nach Anspruch 36, wobei die Bildverarbeitungsmittel (9, 10) in der Lage sind, eine texturierte Region einer Region eines Feldes des Bildes durch einen Bündel-Analyse-Prozess (cluster analysis) durch Identifizieren eines Bündels (Clusters) im Vordergrund befindlicher Bereiche mit einer bestimmten Qualität zu analysieren, und wobei die Code-Einfügungsmittel (80 bis 84) in der Lage sind, die Chrominanz- und/oder Luminanzwerte des Clusters eines ausgewählten Blocks in der Region mit einer Insertfunktion zu modifizieren, welche ausgehend von ihrem Mittelpunkt in der Intensität abnimmt, um einen von zwei Binärwerten darzustellen.

38. Vorrichtung nach Anspruch 37, wobei die Code-Einfügungsmittel (80 bis 84) in der Lage sind, über eine Länge der Randregion eine Insertfunktion einzufügen, deren Intensität in nicht-linearer. Weise variiert, um einen von zwei Binärwerten darzustellen.

39. Vorrichtung nach Anspruch 38, wobei sich die Insertfunktion elliptisch ausdehnt mit gradueller Abnahme der Intensität in einer Richtung entlang ihrer Hauptachse, und wobei sich ihre Hauptachse längs am Rand entlang erstreckt.

40. Vorrichtung zum Kodieren eines Bildes nach Anspruch 39, wobei die elliptische Funktion auf dem Mittelpunkt des Randes zentriert ist.

41. Vorrichtung nach einem der Ansprüche 30 bis 38, wobei die Insertfunktion in konkaver Weise in der Intensität variiert.

42. Vorrichtung zum Kodieren eines Bildes nach Anspruch 30, wobei die Bildverarbeitungsmittel (9, 10) Mittel zum Identifizieren eines. Maskierungs-Parameters für das Bild enthalten, und zum Begrenzen der Intensität des eingefügten Codes in Übereinstimmung mit dem Maskierungs-Parameter, so dass der eingefügte Code unsichtbar ist.

43. Vorrichtung zum Kodieren eines Bildes nach Anspruch 42, wobei die Bildverarbeitungsmittel (9, 10) Mittel zum Bestimmen eines Maskierungs-Parameters für zumindest eine dieser Regionen umfassen, und Mittel zum Einfügen kodierter Information (80 bis 84) in solch eine Region in vorhersehbarer oder identifizierbarer Weise in einem Ausmaß, das entsprechend dem Maskierungs-Parameter begrenzt ist.

44. Vorrichtung nach Anspruch 43, wobei die Mittel zur Bestimmung des Maskierungs-Parameters Mittel zum Bewerten des Bildes in Bezug auf den Grad an Aktivität oder Energie in dem Bild umfassen.

45. Vorrichtung nach Anspruch 43 oder 44, wobei die Mittel zur Bestimmung des Maskierungs-Parameters Mittel zum Bewerten des Bildes dahingehend umfassen, ob das Gesamtbild eine Funktion des Typs enthält, in dem die kodierte Information eingefügt ist, und Bewerten des Ausmaßes einer solchen Funktion.

46. Vorrichtung nach Anspruch 30, wobei die Einfügungsmittel (80 bis 84) in der Lage sind, kodierte Information unter Verwendung einer konkaven Funktion einzufügen.

47. Vorrichtung nach Anspruch 45, umfassend: Mittel zur Begrenzung der vollen Intensität, falls die Summe der Intensität der kodierten Information und der Intensität der Funktion in dem Gesamtbild zu hoch ist.

48. Vorrichtung nach einem der Ansprüche 42 bis 47, wobei das Maskierungs-Parameter-Mittel Mittel zum Bestimmen umfasst, ob die merkmalsreiche Region zum Einfügen kodierter Information gut genug definiert ist.

49. Vorrichtung nach Anspruch 48, wobei die Code-Einfügungsmittel (80 bis 84) Mittel zum Kodieren einer Teilmenge des ausgewählten Blocks gemäß einer Pseudo-Zufalls-Sequenz umfassen, so dass die Blöcke (13) in der Teilmenge eines oder mehrere Informations-Bits darstellen.

50. Vorrichtung nach Anspruch 49, wobei die Bildverarbeitungsmittel (9, 10) Mittel zum Berechnen einer Insertfunktion umfassen, die zu der Luminanz jedes Pixels in dem Block hinzuaddiert wird, basierend auf dem Abstand des Pixels vom Mittelpunkt des Randes.

51. Vorrichtung zum Kodieren eines Bildes nach Anspruch 50, wobei die Bildverarbeitungsmittel (9, 10) in der Lage sind, den Bild-Typ in jedem ausgewählten Block (13) dahingehend zu bewerten, ob er eine einzelne merkmalsreiche Region besitzt, mehr als eine merkmalsreiche Region, oder ob er einen Block mit geringer Aktivität, bezogen auf Bildinformation, darstellt.

52. Vorrichtung nach Anspruch 51, wobei die Code-Einfügungsmittel so ausgebildet sind, dass sie einen Code in einen Block (13) einfügen, der mit geringer Aktivität bewertet ist, wobei der Code durch eine geometrische Region definiert ist, in der die Pixel innerhalb der Region eine entsprechend einer vorbestimmten Funktion modulierte Luminanz besitzen.

53. Vorrichtung zum Dekodieren unsichtbar eingebetteter kodierter Information in einem Bild, umfassend: Analysierungsmittel (9, 10) zum Analysieren des Bildes, Aufteilen des Bildes in eine Mehrzahl von Feldern, und Aufteilen jedes Feldes in N*M Blöcke zu jeweils n*m Pixeln, Musterbestimmungs-Mittel, die in der Lage sind, eine vorbestimmte Sequenz vorbestimmter verschiedener Auswahlmuster zu definieren, und somit ein vorbestimmtes Muster ausgewählter Blöcke (13) in einem zu dekodierenden Feld auszuwählen, wobei die Muster in der Sequenz so beschaffen sind, dass in jedem Muster ausgewählte Blöcke nicht in einer vorbestimmten Anzahl aufeinanderfolgender, in der Sequenz unmittelbar aufeinander folgender Muster ausgewählt werden, Muster-Auswahlmittel (11, 12), die in der Lage sind, das erste Auswahlmuster einer Sequenz bei einem ausgewählten Feld anzuwenden, um ausgewählte Blöcke in dem ausgewählten Feld zu identifizieren, und wobei die Block-Auswahlmittel in der Lage sind, das nächstfolgende Muster in der Sequenz bei dem nächstfolgenden Feld anzuwenden, um ausgewählte Blöcke in dem Feld zu identifizieren, und Dekodiermittel (14 bis 58), die in der Lage sind, jeden identifizierten ausgewählten Block in jedem Feld zu analysieren, merkmalsreiche Regionen in jedem ausgewählten Block, wo eine vorhersehbare Einfügung kodierter Information eingebettet sein kann, zu identifizieren, die Einfügung in dem ausgewählten Block zu lokalisieren und die in der Einfügung enthaltenen Informationen zu dekodieren.

54. Vorrichtung zum Dekodieren eines Bildes nach Anspruch 53, wobei die Musterbestimmungsmittel in der Lage sind, die Reihenfolge von Mustern für eine vorbestimmte Anzahl von Feldern zyklisch zu wiederholen.

**55.** Vorrichtung nach Anspruch 53, wobei die Musterbestimmungsmittel in der Lage sind, Blöcke entsprechend der Funktion

$$(cfc + I + j) \, KP == 0$$

auszuwählen, wobei I und j die horizontalen und vertikalen Indizes der Blöcke in einem Feld sind, K ein Modul ist, P die Anzahl der Muster in der Sequenz ist, cfc eine vorbestimmte zyklische Feldzählung ist und die Blöcke (13) ausgewählt werden, wenn die Funktion wahr ist, und nicht wenn die Funktion falsch ist.

**56.** Vorrichtung zum Dekodieren eines Bildes nach einem der Ansprüche 53 bis 55, wobei die Dekodiermittel (14 bis 58) Bewertungsmittel umfassen zum Abschätzen des Bildes dahingehend, ob das Gesamtbild eine Funktion des Typs enthält, in der kodierte Informationen eingefügt sind, und zum Bewerten des Ausmaßes eines solchen Parameters, und wobei die Korrelationsmittel in der Lage sind, solche Bewertungen mit der vorhergesehenen Einfügung zu korrelieren.

**57.** Vorrichtung nach Anspruch 56 wobei die Bewertungsmittel so ausgebildet sind, dass sie einen konkaven Parameter bewerten.

**58.** Vorrichtung nach Anspruch 56, wobei die Bewertungsmittel ein Maskierungs-Parameter-Bestimmungsmittel umfassen zum Bestimmen, ob die merkmalsreiche Region gut genug definiert ist, um das Einfügen kodierter Informationen zu gestatten.

**59.** Vorrichtung nach Anspruch 53, wobei die Dekodiermittel (14 bis 58) so ausgebildet sind, dass sie Randregionen zwischen Bereichen verschiedener Luminanz und/oder Chrominanz jedes ausgewählten Blocks (13) identifizieren.

**60.** Vorrichtung zum Dekodieren eines Bildes nach Anspruch 53, wobei die Dekodiermittel (14 bis 58) so ausgebildet sind, dass sie texturierte Regionen mit darin verteilten lokalisierten Bereichen verschiedener Luminanz- oder Chrominanzwerte identifizieren.

**61.** Vorrichtung nach Anspruch 60, wobei die Dekodiermittel (14 bis 58) so ausgebildet sind, dass sie eine texturierte Region eines Feldes des Bildes durch einen Bündel-Analyse-Prozess (cluster analysis) analysieren, um ein Bündel (Cluster) im Vordergrund angeordneter Bereiche mit einer bestimmten Qualität zu identifizieren, und wobei die Dekodiermittel ein Abschätzmittel enthalten zum Bestimmen, ob eine Modifizierung der Chrominanz- und/oder Luminanzwerte in dem ausgewählten Block (13) entsprechend einer Insertfunktion besteht, welche von ihrem Mittelpunkt aus in der Intensität abnimmt, zum Darstellen eines von zwei Binärwerten.

**62.** Vorrichtung zum Dekodieren eines Bildes nach Anspruch 61, wobei die Abschätzmittel so ausgebildet sind, dass sie eine Insertfunktion von kreisförmiger Ausdehnung und Zentrierung auf dem geometrischen Mittelpunkt des Clusters bestimmen.

**63.** Vorrichtung nach Anspruch 61, wobei die Abschätzmittel so ausgebildet sind, dass sie über die Länge der Randregion hinweg eine Insertfunktion bestimmen, deren Intensität in nicht-linearer Weise variiert, um einen von zwei Binärwerten darzustellen.

**64.** Vorrichtung zum Dekodieren eines Bildes nach Anspruch 61, wobei die Abschätzmittel so angeordnet sind, dass sie eine in der Ausdehnung elliptische Insertfunktion bestimmen, deren Intensität graduell in einer Richtung entlang ihrer Hauptachse abnimmt, und wobei sich ihre Hauptachse längs am Rand entlang erstreckt.

**65.** Vorrichtung zum Dekodieren eines Bildes nach einem der Ansprüche 61 bis 64, wobei die Abschätzmittel so ausgebildet sind, dass sie eine Insertfunktion bestimmen, die in konkaver Weise in der Intensität variiert.

**66.** Vorrichtung zum Dekodieren eines Bildes nach Anspruch 61, wobei die Dekodiermittel (14 bis 58) und die Abschätzmittel so ausgebildet sind, dass sie eine Teilmenge ausgewählter Blöcke zum Dekodieren entsprechend einer Pseudo-Zufalls-Sequenz auswählen, wobei die Blöcke in der Gruppe eines oder mehrere Informations-Bits repräsentieren.

**67.** Vorrichtung zum Dekodieren eines Bildes nach Anspruch 53, wobei die Dekodiermittel (14 bis 58) Bewertungsmittel zum Abschätzen des Bild-Typs in jedem ausgewählten Block umfassen, ob er eine einzelne merkmalsreiche Region besitzt, mehrere solcher Regionen, oder ob es ein Block mit niedriger Aktivität in Bezug auf Bildinformation ist.

68. Vorrichtung zum Dekodieren eines Bildes nach Anspruch 53, wobei die Abschätzmittel so ausgebildet sind, dass sie einen in einen Block (13) mit niedriger Aktivität eingefügten Code feststellen, definiert durch eine geometrische Region, worin die Pixel in der Region eine Luminanz besitzen, die entsprechend einer vorbestimmten Funktion moduliert ist.

69. Vorrichtung zum Dekodieren eines Bildes nach Anspruch 68, wobei die Dekodiermittel (14 bis 58) so ausgebildet sind, dass sie eine kreisförmige Einfügung mit konkaver Variation der Intensität in radialer Richtung feststellen.

70. Vorrichtung nach Anspruch 69, wobei die merkmalsreichen Regionen Randregionen zwischen Bereichen verschiedener Luminanz und/oder Chrominanz umfassen, oder texturierte Regionen mit darin verteilten lokalisierten Bereichen verschiedener Luminanz und/oder Chrominanz.

71. Vorrichtung nach Anspruch 69 oder Anspruch 70, beinhaltend Analysierungsmittel zum Bestimmen merkmalsschwacher oder Hintergrund-Regionen in jedem Block (13), und wobei - wenn diese identifiziert sind - die Feststellungsmittel veranlasst werden, eine geeignete Insertfunktion in einer solchen Region feststellen.

72. Vorrichtung nach Anspruch 71, wobei die Insertfunktion eine relativ große Region mit konstanter oder langsam variierender Luminanz über ihrem Bereich ist.

73. Vorrichtung zum Dekodieren eines Bildes nach Anspruch 53, wobei die Insertfunktion kreisförmig ausgebildet ist mit einer Intensität, die konkav in radialer Richtung variiert.


**Revendications**

1. Procédé d'incorporation invisible d'informations codées dans une image comprenant les étapes consistant à

   (a) analyser l'image,
   (b) diviser l'image en une pluralité de champs (1, 2, 3, 4),
   (c) diviser chaque champ en N*M blocs, chacun de n*m pixels,
   (d) définir une séquence prédéterminée de motifs de sélection différents, dont chacun sélectionne un motif prédéterminé de blocs sélectionnés (13) dans un champ (1, 2, 3, 4), chaque motif dans la séquence étant tel que les blocs sélectionnés dans chaque motif ne sont pas sélectionnés dans un nombre prédéterminé de motifs successifs qui suivent immédiatement dans la séquence,
   (e) appliquer le premier motif de sélection de la séquence à un champ sélectionné de blocs sélectionnés dans le champ sélectionné,
   (f) appliquer le motif successif suivant dans la séquence au champ successif suivant pour sélectionner des blocs dans ce champ,
   (g) répéter l'étape (f) sur un nombre de champs prédéterminé pour tous les motifs dans la séquence,
   (h) analyser chaque bloc sélectionné (13) dans chaque champ et identifier les régions fortement **caractérisées** dans chaque bloc sélectionné, et
   (i) insérer des informations codées dans lesdites régions de chaque bloc sélectionné (13), et
   (j) répéter les étapes (d) à (i) pour un nombre de champs prédéterminé.

2. Procédé de codage d'une image selon la revendication 1, dans lequel la séquence de motifs est répétée de façon cyclique sur un nombre de champs prédéterminé.

3. Procédé de codage d'une image selon la revendication 2, dans lequel la séquence de motifs est répétée de façon cyclique et les blocs (13) sont sélectionnés conformément à la fonction

$$(cfc + I + j) Kp == 0$$

   où I et j sont les indices horizontaux et verticaux des blocs dans un champ, K est un module, P est le nombre de motifs dans la séquence, cfc est un compte de champs cycliques prédéterminé et les blocs (13) sont sélectionnés lorsque la fonction est vraie et ne le sont pas lorsque la fonction est fausse.

**4.** Procédé de codage d'une image selon la revendication 2 ou la revendication 3, dans lequel plus d'un sous-ensemble de blocs (13) sont sélectionnés dans chaque champ et les blocs dans chaque sous-ensemble sont incorporés avec un bit de code concernant un ensemble d'informations, et les blocs dans un autre sous-ensemble sont incorporés avec un bit de code concernant un autre ensemble d'informations.

**5.** Procédé de codage d'une image selon l'une quelconque des revendications 1 à 4, dans lequel les régions fortement **caractérisées** comprennent des régions de bord entre les aires de luminance et/ou de chrominance différentes.

**6.** Procédé de codage d'une image selon la revendication 5, dans lequel les régions fortement **caractérisées** comprennent des régions texturées comportant, réparties dans celles-ci, des aires localisées de valeurs de luminance et/ou de chrominance différentes.

**7.** Procédé de codage d'une image selon la revendication 6, comprenant l'analyse d'une région texturée d'un champ de l'image par un processus d'analyse de groupe, identifiant un groupe d'aires locales en premier plan avec une qualité prédéterminée dans la région texturée du champ et la modification des valeurs de chrominance et/ou de luminance dans un ou plusieurs blocs sélectionnés situés dans la région texturée du champ avec une fonction d'insertion, dont l'intensité diminue à partir de son centre, pour représenter une parmi deux valeurs binaires.

**8.** Procédé de codage d'une image selon la revendication 7, dans lequel la fonction d'insertion est d'extension circulaire, centrée sur le centre géométrique du groupe dans la région texturée du bloc sélectionné.

**9.** Procédé de codage d'une image selon la revendication 5, comportant l'étape d'insertion sur une longueur de la région de bord d'un bloc sélectionné (13) d'une fonction d'insertion dont l'intensité varie d'une manière non linéaire, pour représenter une parmi deux valeurs binaires.

**10.** Procédé de codage d'une image selon la revendication 9, dans lequel la fonction d'insertion est d'extension elliptique, son intensité diminuant progressivement dans la direction de son grand axe et son grand axe s'étendant sur la longueur du bord.

**11.** Procédé de codage d'une image selon la revendication 10, dans lequel la fonction elliptique est centrée sur le centre du bord dans un bloc sélectionné (13).

**12.** Procédé de codage d'une image selon l'une quelconque des revendications 5 à 7, dans lequel l'intensité de la fonction d'insertion varie d'une manière concave.

**13.** Procédé de codage d'une image selon l'une quelconque des revendications 1 à 12, comportant l'identification d'un paramètre de masquage pour une région dans un champ de l'image et la limitation de l'intensité du code inséré dans chaque bloc sélectionné (13) dans cette région conformément au paramètre de masquage.

**14.** Procédé de codage d'une image selon la revendication 13, dans lequel la détermination du paramètre de masquage comporte l'estimation de l'image selon le degré de force ou d'énergie de la région fortement **caractérisée** dans l'image et la détermination de l'intensité du code destiné à être inséré dans un bloc sélectionné (13) en fonction de cette estimation de force.

**15.** Procédé de codage d'une image selon la revendication 13, comportant l'estimation d'une région d'un champ de l'image selon que la région contient une fonction d'image d'un type similaire à une fonction d'insertion destinée à être insérée dans les blocs sélectionnés (13) dans la région et l'estimation de l'intensité de la fonction d'image.

**16.** Procédé de codage d'une image selon la revendication 15, dans lequel, si ladite région du champ de l'image contient ladite fonction d'image, la somme de ladite fonction d'image et de la fonction d'insertion est limitée si l'intensité de la fonction d'image est supérieure à une valeur prédéterminée.

**17.** Procédé de codage d'une image selon l'une quelconque des revendications 1 à 12, comprenant l'étape de détermination au moins pour une région d'un champ de l'image d'un paramètre de masquage et l'insertion dans un ou plusieurs blocs sélectionnés (13) situés dans ladite région, d'informations codées d'une manière prédictible et identifiable d'une quantité limitée en fonction dudit paramètre de masquage.

**18.** Procédé de codage d'une image selon l'une quelconque des revendications 13 à 16, dans lequel la détermination du paramètre de masquage comporte la détermination du fait que la région fortement **caractérisée** d'un champ de l'image est suffisamment bien définie pour permettre l'insertion d'informations codées dans un bloc sélectionné (13) dans ladite région de l'image.

**19.** Procédé de codage d'une image selon la revendication 1, comportant l'étape de calcul d'une fonction d'insertion destinée à être ajoutée à la luminance de chaque pixel dans un bloc sélectionné (13) en se basant sur la distance du pixel par rapport au point central du bord.

**20.** Procédé de codage d'une image selon la revendication 19, dans lequel une estimation est effectuée de chaque bloc sélectionné (13) pour estimer, s'il possède une simple région fortement **caractérisée**, possède plusieurs régions fortement **caractérisées** ou est un bloc ayant une faible activité en termes d'informations d'image.

**21.** Procédé de codage d'une image selon la revendication 19, dans lequel si un bloc (13) est estimé avoir une faible activité, un code est inséré dans le bloc défini par une région géométrique où les pixels dans la région ont une luminance modulée conformément à une fonction prédéterminée.

**22.** Procédé de décodage d'informations codées incorporées de façon invisible dans une image, comprenant les étapes consistant à

(a) analyser l'image,
(b) diviser l'image en une pluralité de champs (1, 2, 3, 4),
(c) diviser chaque champ en N*M blocs, chacun de n*m pixels,
(d) définir une séquence prédéterminée de motifs de sélection différents, dont chacun sélectionne un motif prédéterminé de blocs sélectionnés (13) dans un champ, chaque motif dans la séquence étant tel que les blocs sélectionnés dans chaque motif ne sont pas sélectionnés dans un nombre prédéterminé de motifs successifs qui suivent immédiatement dans la séquence,
(e) appliquer le premier motif de sélection d'une séquence à un champ sélectionné de blocs sélectionnés dans le champ sélectionné,
(f) appliquer le motif successif suivant dans la séquence au champ successif suivant pour identifier des blocs dans ce champ,
(g) répéter l'étape (f) sur un nombre de champs prédéterminé pour tous les motifs dans la séquence,
(h) analyser chaque bloc sélectionné identifié dans chaque champ et identifier les régions fortement **caractérisées** dans chaque bloc sélectionné, et
(i) décoder des informations contenues dans lesdites régions de chaque bloc sélectionné, et
(j) répéter les étapes (d) à (i) sur un nombre de champs prédéterminé.

**23.** Procédé de décodage d'une image selon la revendication 22, comportant l'étape de détermination de l'intensité d'une fonction d'insertion anticipée conformément à un paramètre de masquage basé sur la force ou l'énergie d'une région fortement **caractérisée** de l'image globale.

**24.** Procédé de décodage d'une image selon la revendication 22, comportant l'estimation de chaque bloc sélectionné (13) selon que le bloc contient une fonction du type dont les informations codées sont insérées, l'estimation du degré de cette fonction et la corrélation d'une insertion anticipée avec l'image.

**25.** Procédé de décodage d'une image selon la revendication 22, comprenant l'analyse d'une région texturée d'un champ de l'image par un processus d'analyse de groupe, identifiant un groupe d'aires locales en premier plan avec une certaine qualité et la détermination du fait qu'il existe un bloc sélectionné (13) situé dans la région texturée ayant une fonction d'insertion constituée d'une modification des valeurs de chrominance et/ou luminance d'un groupe dont l'intensité diminue à partir de son centre, pour représenter une parmi deux valeurs binaires et le décodage des valeurs binaires.

**26.** Procédé de décodage d'une image selon la revendication 25, dans lequel la fonction d'insertion est d'extension circulaire et est centrée sur le centre géométrique du groupe.

**27.** Procédé de décodage d'une image selon la revendication 22, comportant l'étape de détermination du fait qu'il existe, sur la longueur d'une région de bord dans un bloc sélectionné (13), une fonction d'insertion dont l'intensité varie d'une manière non linéaire, pour représenter une parmi deux valeurs binaires et de décodage des valeurs binaires.

28. Procédé de décodage d'une image selon la revendication 22, dans lequel un sous-ensemble de blocs sélectionnés (13), sélectionnés selon ladite séquence de motifs de sélection, sont décodés selon une séquence pseudo-aléatoire, les blocs dans le sous-ensemble représentant un ou plusieurs bits d'informations.

29. Procédé de décodage d'une image selon la revendication 22, comportant l'étape de détermination du fait qu'un bloc (13) a une faible activité et de détection d'un code inséré dans le bloc défini par une région géométrique où les pixels dans la région ont une luminance modulée selon une fonction prédéterminée.

30. Appareil d'incorporation invisible d'informations codées dans une image comprenant des moyens de traitement d'image (9, 10) pour analyser l'image, diviser l'image en une pluralité de champs et diviser chaque champ en N*M blocs, chacun de n*m pixels, des moyens de définition de motifs (11, 12) pouvant être actionnés pour définir une séquence prédéterminée de motifs de sélection différents, dont chacun, en fonctionnement, sélectionne un motif prédéterminé de blocs sélectionnés (13) dans un champ, chaque motif dans la séquence étant tel que, en fonctionnement, les blocs sélectionnés dans chaque motif ne sont pas sélectionnés dans un nombre prédéterminé de motifs successifs qui suivent immédiatement dans la séquence, des moyens de sélection de blocs (14, 16) pour appliquer le premier motif de sélection d'une séquence à un champ sélectionné de blocs sélectionnés dans le champ sélectionné, lesdits moyens de sélection de blocs pouvant être actionnés pour appliquer le motif successif suivant dans la séquence au champ successif suivant pour sélectionner des blocs dans ce champ, des moyens d'analyse pour analyser chaque bloc sélectionné dans chaque champ et pouvant être actionnés pour identifier les régions fortement **caractérisées** dans chaque bloc sélectionné, et des moyens d'insertion de code (80 à 84) pouvant être actionnés pour insérer des informations codées dans lesdites régions de chaque bloc sélectionné.

31. Appareil de codage d'une image selon la revendication 30, dans lequel les moyens de définition de motifs (11, 12) peuvent être actionnés pour répéter la séquence de motifs de façon cyclique pour un nombre de champs prédéterminé.

32. Appareil de codage d'une image selon la revendication 31, dans lequel les blocs sont sélectionnés conformément à la fonction

$$(cfc + I + j)\ KP == 0$$

où I et j sont les indices horizontaux et verticaux des blocs dans un champ, K est un module, P est le nombre de motifs dans la séquence, cfc est un compte de champs cycliques prédéterminé et les blocs sont sélectionnés lorsque la fonction est vraie et ne le sont pas lorsque la fonction est fausse.

33. Appareil de codage d'une image selon l'une quelconque des revendications 30 à 32, dans lequel plus d'un sous-ensemble de blocs sélectionnés (13) sont sélectionnés dans chaque champ et les moyens d'insertion de code (80 à 84) agissent sur chaque sous-ensemble pour insérer un bit de code concernant un ensemble d'informations, et pour insérer dans les blocs un autre sous-ensemble incorporé avec un bit de code concernant un autre ensemble d'informations.

34. Appareil de codage d'une image selon la revendication 33, dans lequel les moyens de traitement d'image (9, 10) peuvent être actionnés pour identifier des régions de bord entre des aires de luminance et/ou de chrominance différentes.

35. Appareil de codage d'une image selon la revendication 33, dans lequel les moyens de traitement d'image (9, 10) peuvent être actionnés pour identifier des régions texturées d'un champ de l'image comportant, réparties dans celles-ci, des aires localisées de valeurs de luminance et/ou de chrominance différentes.

36. Appareil de codage d'une image selon l'une quelconque des revendications 30 à 35, dans lequel les moyens d'insertion de code (80 à 84) peuvent être actionnés pour modifier la structure de l'image d'une manière prédictible ou identifiable de façon que les informations codées puissent ensuite être récupérées sans référence à l'image d'origine.

37. Appareil de codage d'une image selon la revendication 36, dans lequel lesdits moyens de traitement d'image (9, 10) peuvent être actionnés pour analyser une région texturée d'une région d'un champ de l'image par un processus d'analyse de groupe, en identifiant un groupe d'aires locales en premier plan avec une certaine qualité et les moyens d'insertion de code (80 à 84) peuvent être actionnés pour modifier les valeurs de chrominance et/ou de luminance du groupe d'un bloc sélectionné dans ladite région avec une fonction d'insertion, dont l'intensité diminue à partir de son centre, pour représenter une parmi deux valeurs binaires.

38. Appareil selon la revendication 37, dans lequel lesdits moyens d'insertion de code (80 à 84) peuvent être actionnés pour insérer sur une longueur de la région de bord une fonction d'insertion dont l'intensité varie d'une manière non linéaire, pour représenter une parmi deux valeurs binaires.

39. Appareil selon la revendication 38, dans lequel la fonction d'insertion est d'extension elliptique, son intensité diminuant progressivement dans la direction de son grand axe et son grand axe s'étendant sur la longueur du bord.

40. Appareil de codage d'une image selon la revendication 39, dans lequel la fonction elliptique est centrée sur le centre du bord.

41. Appareil selon l'une quelconque des revendications 30 à 38, dans lequel l'intensité de la fonction d'insertion varie d'une manière concave.

42. Appareil de codage d'une image selon la revendication 30, dans lequel les moyens de traitement d'image (9, 10) comporte des moyens pour identifier un paramètre de masquage pour l'image et limiter l'intensité du code inséré en fonction du paramètre de masquage de façon que le code inséré soit invisible.

43. Appareil de codage d'une image selon la revendication 42, dans lequel les moyens de traitement d'image (9, 10) comportent des moyens pour déterminer pour au moins l'une de ces régions un paramètre de masquage et des moyens pour insérer des informations codées (80 à 84) dans cette région d'une manière prédictible ou identifiable en une quantité limitée conformément audit paramètre de masquage.

44. Appareil selon la revendication 43, dans lequel les moyens de détermination du paramètre de masquage comportent des moyens pour estimer l'image selon le degré d'activité ou l'énergie dans l'image.

45. Appareil selon la revendication 43 ou 44, dans lequel les moyens de détermination du paramètre de masquage comportent des moyens pour estimer l'image selon que l'image globale contient une fonction du type dont les informations codées sont insérées et l'estimation du degré de cette fonction.

46. Appareil selon la revendication 30, dans lequel les moyens d'insertion (80 à 84) agissent en insérant des informations codées en utilisant une fonction concave.

47. Appareil selon la revendication 45, comportant des moyens pour limiter l'intensité totale si la somme de l'intensité des informations codées et de l'intensité de la fonction dans l'image globale est trop grande.

48. Appareil selon l'une quelconque des revendications 42 à 47, dans lequel les moyens de paramètre de masquage comportent des moyens pour déterminer si la région fortement **caractérisée** est suffisamment bien définie pour permettre l'insertion d'informations codées.

49. Appareil selon la revendication 48, dans lequel les moyens d'insertion de code (80 à 84) comportent des moyens pour coder un sous-ensemble sélectionné selon une séquence pseudo aléatoire de façon que les blocs (13) dans le sous-ensemble représentent un ou plusieurs bits d'informations.

50. Appareil selon la revendication 49, dans lequel les moyens de traitement d'image (9, 10) comportent des moyens pour calculer une fonction d'insertion destinée à être ajouté à la luminance de chaque pixel dans le bloc en se basant sur la distance du pixel par rapport au point central du bord.

51. Appareil de décodage d'une image selon la revendication 50, dans lequel les moyens de traitement d'image (9, 10) peuvent être actionnés pour estimer le type d'image dans chaque bloc sélectionné (13), selon qu'il possède une simple région fortement **caractérisée**, possède plusieurs régions fortement **caractérisées** ou est un bloc ayant une faible activité en termes d'informations d'image.

**52.** Appareil selon la revendication 51, dans lequel les moyens d'insertion de code sont agencés pour insérer un code dans un bloc (13) estimé avoir une faible activité, le code étant défini par une région géométrique où les pixels dans la région ont une luminance modulée conformément à une fonction prédéterminée.

**53.** Appareil de décodage d'informations codées incorporées de façon invisible dans une image, comprenant des moyens d'analyse (9, 10) pour analyser l'image, diviser l'image en une pluralité de champs et diviser chaque champ en N*M blocs, chacun de n*m pixels, des moyens de définition de motifs pouvant être actionnés pour définir une séquence prédéterminée de motifs de sélection prédéterminés différents, et sélectionner ainsi un motif prédéterminé de blocs sélectionnés (13) dans un champ destiné à être décodé, lesdits motifs dans la séquence étant tels que les blocs sélectionnés dans chaque motif ne sont pas sélectionnés dans un nombre prédéterminé de motifs successifs qui suivent immédiatement dans la séquence, des moyens de sélection de motifs (11, 12) pouvant être actionnés pour appliquer le premier motif de sélection d'une séquence à un champ sélectionné pour identifier les blocs sélectionnés dans le champ sélectionné et lesdits moyens de sélection de blocs pouvant être actionnés pour appliquer le motif successif suivant dans la séquence au champ successif suivant pour identifier des blocs sélectionnés dans ce champ, et des moyens de décodage (14 à 58) pouvant être actionnés pour analyser chaque bloc sélectionné identifié dans chaque champ, identifier les régions fortement **caractérisées** dans chaque bloc sélectionné ou une insertion anticipée d'informations codées peut être incorporée en localisant ladite insertion dans chaque bloc sélectionné, et décoder les informations contenues dans ladite insertion.

**54.** Appareil de décodage d'une image selon la revendication 53, dans lequel les moyens de définition de motifs peuvent être actionnés pour répéter la séquence de motifs de façon cyclique pour un nombre de champs prédéterminé.

**55.** Appareil selon la revendication 53, dans lequel les moyens de définition de motifs peuvent être actionnés pour sélectionner des blocs conformément à la fonction

$$(cfc + I + j) KP == 0$$

où I et j sont les indices horizontaux et verticaux des blocs dans un champ, K est un module, P est le nombre de motifs dans la séquence, cfc est un compte de champs cycliques prédéterminé et les blocs sont sélectionnés lorsque la fonction est vraie et ne le sont pas lorsque la fonction est fausse.

**56.** Appareil de décodage d'une image selon l'une quelconque des revendications 53 à 55, dans lequel les moyens de décodage (14 à 58) comportent des moyens d'estimation pour estimer l'image selon que l'image globale contient une fonction du type dont les informations codées sont insérées et pour estimer le degré de ce paramètre et lesdits moyens de corrélation agissent en effectuant la corrélation de ces estimations avec l'insertion anticipée.

**57.** Appareil selon la revendication 56, dans lequel les moyens d'estimation sont agencés pour estimer un paramètre concave.

**58.** Appareil selon la revendication 56, dans lequel les moyens d'estimation comportent des moyens de détermination d'un paramètre de masquage pour déterminer si la région fortement **caractérisée** est suffisamment bien définie pour comporter une insertion autorisée d'informations codées.

**59.** Appareil selon la revendication 53, dans lequel les moyens de décodage (14 à 58) sont agencés pour identifier les régions de bord entre des aires de luminance et/ou de chrominance différente de chaque bloc sélectionné (13).

**60.** Appareil de décodage d'une image selon la revendication 53, dans lequel les moyens de décodage (14 à 58) sont agencés pour identifier des régions texturées comportant, réparties dans celles-ci, des aires localisées de valeurs de luminance et/ou de chrominance différentes.

**61.** Appareil selon la revendication 60, dans lequel les moyens de décodage (14 à 58) sont agencés pour analyser une région texturée d'un champ de l'image par un processus d'analyse de groupe, pour identifier un groupe d'aires locales en premier plan avec une certaine qualité et les moyens de décodage comportent des moyens d'estimation agencés pour déterminer s'il existe une modification des valeurs de chrominance et/ou de luminance dans un bloc sélectionné (13) correspondant à une fonction d'insertion, dont l'intensité diminue à partir de son centre, pour représenter une parmi deux valeurs binaires.

**EP 0 966 837 B1**

**62.** Appareil de décodage d'une image selon la revendication 61, dans lequel les moyens d'estimation sont agencés pour déterminer une fonction d'extension circulaire et centrée sur le centre géométrique du groupe.

**63.** Appareil selon la revendication 61, dans lequel les moyens d'estimation sont agencés pour déterminer sur la longueur de la région de bord une fonction d'insertion dont l'intensité varie d'une manière non linéaire, pour représenter une parmi deux valeurs binaires.

**64.** Appareil de décodage d'une image selon la revendication 61, dans lequel les moyens d'estimation sont agencés pour déterminer une fonction d'insertion d'extension elliptique, son intensité diminuant progressivement dans la direction de son grand axe et son grand axe s'étendant sur la longueur du bord.

**65.** Appareil de décodage d'une image selon l'une quelconque des revendications 61 à 64, dans lequel les moyens d'estimation sont agencés pour déterminer une fonction d'insertion dont l'intensité varie d'une manière concave.

**66.** Appareil de décodage d'une image selon la revendication 61, dans lequel les moyens de décodage (14 à 58) et les moyens d'estimation sont agencés pour sélectionner un sous-ensemble de blocs sélectionnés, pour décodage selon une séquence pseudo-aléatoire, les blocs dans le groupe représentant un ou plusieurs bits d'informations.

**67.** Appareil de décodage d'une image selon la revendication 53, dans lequel les moyens de décodage (14 à 58) comportent des moyens d'estimation pour estimer le type d'image dans chaque bloc sélectionné, selon qu'il possède une simple région fortement **caractérisée**, possède plusieurs de ces régions ou est un bloc ayant une faible activité en termes d'informations d'image.

**68.** Appareil de décodage d'une image selon la revendication 53, dans lequel les moyens d'estimation sont agencés pour détecter un code inséré dans un bloc de faible activité (13) défini par une région géométrique où les pixels dans la région ont une luminance modulée selon une fonction prédéterminée.

**69.** Appareil de décodage d'une image selon la revendication 68, dans lequel les moyens de décodage (14 à 58) sont agencés pour détecter une insertion circulaire avec une variation d'intensité concave dans une direction radiale.

**70.** Appareil selon la revendication 69, dans lequel les régions fortement **caractérisées** comprennent des régions de bord entre des aires de luminance et/ou de chrominance différentes ou des régions texturées comportant, réparties dans celles-ci, des aires localisées de valeurs de luminance et/ou de chrominance différentes.

**71.** Appareil selon la revendication 69 ou la revendication 70, comportant des moyens d'analyse pour déterminer dans chaque bloc (13) des régions faiblement **caractérisées** ou d'arrière plan et si elles sont identifiées, lesdits moyens de détection sont agencés pour détecter une fonction d'insertion appropriée dans une telle région.

**72.** Appareil selon la revendication 71, dans lequel la fonction d'insertion est une région relativement grande ayant une luminance constante ou variant lentement sur son aire.

**73.** Appareil de décodage d'une image selon la revendication 53, dans lequel la fonction d'insertion est circulaire, ayant une intensité qui varie d'une manière concave dans une direction radiale.

# Fig.1.

x=AXIS →

| 1 | 2 | 3 |

(0,0)    (WIDTH,0)

y=AXIS ↓

(0,HEIGHT)    (WIDTH,HEIGHT)

# Fig.2.

N →

n=8

m=8

M ↓

| 1 | 2 | 3 | 4 | 5 | 6 | 7 |
|---|---|---|---|---|---|---|
| 8 | 9 | 10 | | | | |
| | | | | | | |
| | | | | | | |
| | | | | | | |
| | | | | | | |
| | | | | | | |
| | | | | | | |

1,2,3 ETC.

# Fig.3.

## Fig.4.

## Fig.5.

## Fig.6.

Fig.6a.

THETA (θ)
ORIENTED

Fig.6b.

LOW-PASS

Fig.6c.

INCONSISTENT

# Fig.7.

# Fig.8.

Fig.9.

VIDEO EMBEDDED CODING-
ENCODER-BLOCK DIAGRAM

EP 0 966 837 B1

Fig.9(Cont).

Fig.10.

# Fig.10(Cont).